**Europäisches Patentamt**

**European Patent Office**

**Office européen des brevets**

(19)

(11) Veröffentlichungsnummer: **0 085 758**

**A2**

(12) # EUROPÄISCHE PATENTANMELDUNG

(21) Anmeldenummer: **82110451.0**

(22) Anmeldetag: **12.11.82**

(51) Int. Cl.³: **B 65 B 55/12**
**B 65 B 3/32**

(30) Priorität: **10.02.82 DE 3204658**
**21.04.82 DE 3214662**
**28.08.82 DE 8224352 U**
**20.10.82 DE 8229756 U**

(43) Veröffentlichungstag der Anmeldung:
**17.08.83 Patentblatt 83/33**

(84) Benannte Vertragsstaaten:
**AT BE CH DE FR GB IT LI LU NL SE**

(71) Anmelder: **Molkerei Elsdorf e.G.**

**D-2730 Elsdorf(DE)**

(72) Erfinder: **Agena, Peter Willms**
**Molkerei**
**D-2730 Elsdorf(DE)**

(74) Vertreter: **UEXKÜLL & STOLBERG Patentanwälte**
**Beselerstrasse 4**
**D-2000 Hamburg 52(DE)**

(54) Vorrichtung und Verfahren zum automatischen keimarmen Abfüllen von loser Milch in Flaschen.

(57) Eine Milchabfüllvorrichtung weist einen Schrank (20) mit einer Tür (21) auf, durch die ein Milchcontainer (1) einschiebbar ist. In der Tür (21) ist eine Flaschenöffnung (23) vorgesehen, in deren oberem Teil ein Abgabemundstück (29) Milch in eine Flasche oder Kanne nach dem Drücken eines Wahltasters (26) abfüllt. Der jeweils ausgewählte Wahltaster (26) bestimmt die Menge der durch das Abgabemundstück (29) abgegebenen Milch.

Fig.1

EP 0 085 758 A2

**UEXKÜLL & STOLBERG**
PATENTANWÄLTE

EUROPEAN PATENT ATTORNEYS

**0085758**

DR J.-D FRHR von UEXKULL
DR. ULRICH GRAF STOLBERG
DIPL.-ING. JÜRGEN SUCHANTKE
DIPL.-ING. ARNULF HUBER
DR. ALLARD von KAMEKE
DR. KARL-HEINZ SCHULMEYER

Molkerei Elsdorf e.G.                    (19 135 hu/wo)

2730 Elsdorf                             November 1982

Vorrichtung und Verfahren zum automatischen keimarmen

Abfüllen von loser Milch in Flaschen

Beschreibung

Die Erfindung betrifft eine Vorrichtung zum automatischen keimarmen Abfüllen von loser Milch in Flaschen, Kannen o.ä. mit einem in der Molkerei befüllbaren, an den Abgabeort der Milch transportierbaren und dort an die Vorrichtung anschließbaren Milchcontainer.

Derzeit wird die in einer Molkerei verarbeitete Milch in Flaschen oder in verlorenen Packungen abgefüllt. Das Reinigen der zur Molkerei zurückgebrachten Flaschen ist äußerst aufwendig und unwirtschaftlich, da hierzu große Mengen von erhitztem Wasser benötigt werden. Andererseits ist die Herstellung von beschichteten Papierverpackungen oder von Kunststoffverpackungen teuer, so daß ein zunehmender Bedarf nach dem losen Abfüllen von Milch entstanden ist. Bis gegen Ende der sechziger Jahre war es zwar üblich, Milch auch lose in Kannen abzufüllen, wozu eigens dafür vorgesehene und bestimmten Hygienebestimmungen unterworfene Milchgeschäfte zur Verfügung standen. Das Abfüllen der Milch erfolgte damals durch Betätigung von Handkolbenpumpen, die von besonders geschultem Personal gereinigt und keimarm gehalten werden mußten. Derartiges Personal steht heute jedoch nicht mehr zur Verfügung, so daß das Zurückgreifen auf das bekannte Milchabfüllverfahren und die dafür bekannten Vorrichtungen nicht möglich ist.

Da jedoch ein zunehmender Wunsch nach der Abgabe von unverpackter, sogenannter "loser" Milch entstanden ist, ist es Aufgabe der Erfindung, eine Vorrichtung zum automatischen Abfüllen von loser Milch zu schaffen, die auch von ungeschultem Personal keimarm gehalten und vom Käufer selbst betätigt werden kann.

Zur Lösung dieser Aufgabe dient eine Milchabfüllvorrichtung gemäß Oberbegriff des Hauptanspruchs, welche dadurch gekennzeichnet ist, daß auf dem Milchcontainer ein in der Molkerei sterilisierbarer Abgabekopf befestigt ist, der einen Meßzylinder und einen Auslaufstutzen aufweist, und daß in dem Auslaufstutzen ein durch einen Hubmagneten von einem Ventilsitz abhebbarer Absperrkörper vorgesehen ist.

In einer bevorzugten Ausführung ist in dem Milchcontainer eine Pumpe, und zwar vorzugsweise eine Tauchpumpe montiert, welche die Milch aus dem Milchcontainer in den Abgabekopf fördert.

Die erfindungsgemäße Milchabfüllvorrichtung weist im wesentlichen vier Teile auf:

1. einen Milchcontainer
2. eine elektronische Steuerung
3. einen Bedienungsschrank
4. eine Kunststoff-Milchflasche

Der Milchcontainer ist vorzugsweise aus Edelstahl (V2A) hergestellt und hat einen Inhalt von 260 Liter; er wird in der Molkerei durch Spülen mit z.B. 0,8 bis 1 %iger NaOH keimarm gemacht, mit Milch gefüllt und dem Handel zugestellt. Er ist auf Rollen gelagert und daher leicht transportierbar. Außerdem ist der Milchcontainer in einer Ausführung isoliert, beispielsweise durch Polyurethanschaum, so daß die darin befindliche Milch bei geringer Temperatur, beispielsweise $2^{o}C$, mehrere Tage lang aufbewahrt werden kann. Ferner erfolgt keine Unterbrechung der Kühlkette von der Abfüllanlage in der Molkerei zum Aufstellungsort im Bedienungsschrank, so daß die mit der erfindungsgemäßen Vorrichtung abgegebene lose Milch einen besseren Geschmack als die auf bekannte Weise abgepackte Milch hat.

Die elektronische Steuerung und der Bedienungsschrank verbleiben am Aufstellungsort, während der Milchcontainer in der Molkerei gereinigt und befüllt wird. Es kann aber auch ohne Bedienungsschrank gearbeitet werden, wenn die elektronische Steuerung entweder mit dem Milchcontainer, insbesondere mit dessen Bedienungskopf verbunden bleibt oder am Aufstellungsort an den Abgabekopf des Milchcontainers im Freien angeschlossen wird.
Eine solche Ausführung ist wirtschaftlicher herstellbar
als die Ausführung mit Bedienungsschrank.

Die Milchabfüllvorrichtung kann durch Knopfdruck beispielsweise 1/2 l, 1/1 l, 1 1/2 l oder 2 l je nach
Wunsch abgeben. Der Verbraucher stellt hierzu seine
Kunststoff-Milchflasche in eine dafür vorgesehene
Flaschenöffnung des Bedienungsschranks und drückt einen
Wahltaster für die gewünschte Milchmenge. Für die Milchflasche ist beispielsweise Makrolon®, ein äußerst kratzfestes, unzerbrechliches Kunststoffmaterial, geeignet.
Die Milchflasche wird vom Verbraucher selbst gereinigt
und damit umweltbewußt eingesetzt.

Nach dem Drücken eines Wahltasters strömt lose Milch
durch einen Auslaufstutzen nur dann in die Milchflasche, wenn diese an dem richtigen Platz steht. Dies
wird durch ein Mikroschalter sichergestellt, der lediglich in betätigtem Zustand die elektronische Steuerung
freigibt.

Sollte durch ein Versehen ein Wahltaster zweimal gedrückt werden, so verhindert die elektronische Steuerung durch einen Sperrbefehl ein unmittelbar aufeinanderfolgendes Fördern von Milch in einen Meßzylinder des
Abgabekopfs. Nach jedem Pump- oder Abfüllvorgang läuft
die Milch in das Kühlsystem des Milchcontainers zurück,
so daß keine Aufwärmung durch die Umgebungstemperatur
möglich ist.

Ein weiterer Vorteil der Erfindung besteht darin, daß
eine Bedienungsperson über einen Inhaltsanzeiger am
Milchcontainer oder im Bedienungsschrank immer über die noch vorhandenen Milchvorräte informiert wird. Ferner ist eine Berührung der Milch durch den Händler oder vor der Abgabe durch den Verbraucher nicht möglich. Aus hygienischen Gründen kommt die Milchflasche auch nicht mit dem Füllsystem in Berührung. Da die Milch außerdem im Milchcontainer aus Edelstahl (V2A) eingeschlossen bleibt, kann keine Schädigung durch Sonnenlicht oder durch ultraviolette Strahlung erfolgen.

Die mit der erfindungsgemäßen Milchabfüllvorrichtung erzielbaren Vorteile bestehen in folgenden Punkten:

1. Die Frische der Milch bleibt länger erhalten. Die Kühlkette von der Herstellung in der Molkerei über den Handel bis hin zum Verbraucher ist ohne Unterbrechung möglich. Ferner ist eine bessere Haltbarkeit und bessere Frische der Milch bei vollem Erhalt der Vitamine gegeben.

2. Die Umweltfreundlichkeit wird dadurch gefördert, daß ein Wegwerfen von verlorenen Packungen nicht mehr notwendig ist.

3. Durch das Ausschalten von verlorenen Packungen ist eine enorme Einsparung an Energie und Rohstoff gewährleistet, da die erwähnten Milchfläschen aus Makrolon® nahezu unbegrenzt oft benutzt werden können.

In einer Ausführung erfolgt das Füllen des Meßzylinders im Abgabekopf durch eine seitlich in den Meßzylinder mündende Rohrleitung, während der Auslaufstutzen des Meßzylinders durch einen Absperrkörper verschlossen ist. Das Freigeben des Auslaufstutzens erfolgt durch einen den Auslaufstutzen umgebenden Hubmagneten.

In einer anderen Ausführung wird der Auslaufstutzen durch Zangen abgesperrt.

Eine weitere Ausführung der Erfindung fördert die Milch durch Vakuum aus dem Milchcontainer in den Abgabekopf, so daß eine in den Milchcontainer ragende Tauchpumpe überflüssig ist. Stattdessen ist eine Vakuum- oder Saugpumpe an den Abgabekopf angeschlossen.

Die Reinigung der erfindungsgemäßen Milchabfüllvorrichtung erfolgt in der Molkerei vorzugsweise dadurch, daß an einen ersten Flansch des Milchcontainers eine Laugenzuleitung und an einen Ablaßflansch des Milchcontainers eine Laugenrückleitung angeschlossen ist. Letztere kann auch in einem Bodenabfluß münden. Die Laugenzuleitung führt von einem Laugenbehälter zu einem oder mehreren Milchcontainern und enthält vorzugsweise eine Vorlaufpumpe zur Laugenförderung. Wie bereits erwähnt, wird als Lauge beispielsweise 0,8 bis 1 %ige NaOH verwendet. Durch abwechselndes Einschalten der Tauchpumpe verbunden mit einem ebenfalls abwechselnden Aktivieren des Hubmagneten werden auch die Rohrleitungen vom Milchcontainer zum Abgabekopf sowie der Auslaufstutzen und das Abgabemundstück gereinigt.

Die Erfindung wird im folgenden anhand von Figuren näher erläutert; es zeigen:

Figur 1    eine perspektivische Darstellung eines Ausführungsbeispiels;

Figur 2    einen in den Schrank des Ausführungsbeispiels gemäß Figur 1 einsetzbaren Milchcontainer;

- 7 -

**0085758**

Figur 3    eine perspektivische Darstellung eines ersten Abgabekopfs des Milchcontainers gemäß Figur 2;

Figur 4    eine Milchförderpumpe für den Milchcontainer gemäß Figur 2;

Figur 5    einen Schnitt entlang der Linie 5-5 in Figur 4;

Figur 6    einen Vertikalschnitt durch den Abgabekopf gemäß Figur 3;

Figur 7    eine Draufsicht auf den Abgabekopf gemäß Figur 6 mit abgenommenem Sammelzylinderdeckel;

Figur 8    einen Vertikalschnitt eines zweiten Abgabekopfs;

Figur 9    ein in Verbindung mit dem zweiten Abgabekopf gemäß Figur 8 verwendetes Auslaufventil;

Figur 10   einen Vertikalschnitt durch einen dritten Abgabekopf;

Figur 11   einen Absperrkörper des Auslaufventils gemäß Figur 9;

Figur 12   eine Draufsicht auf den Absperrkörper gemäß Figur 11;

Figur 13   einen Vertikalschnitt durch einen vierten Abgabekopf;

Figur 14   ein fünftes Ausführungsbeispiel eines Abgabekopfs;

Figur 15   ein sechstes Ausführungsbeispiel eines Abgabekopfs.

In den Figuren sind gleiche Teile durchwegs mit gleichen Bezugszeichen versehen.

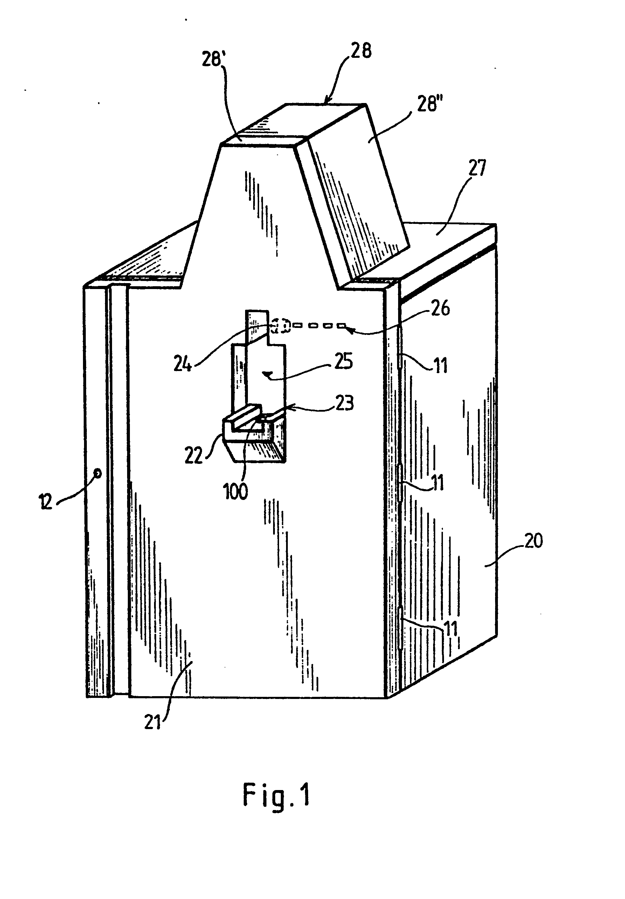

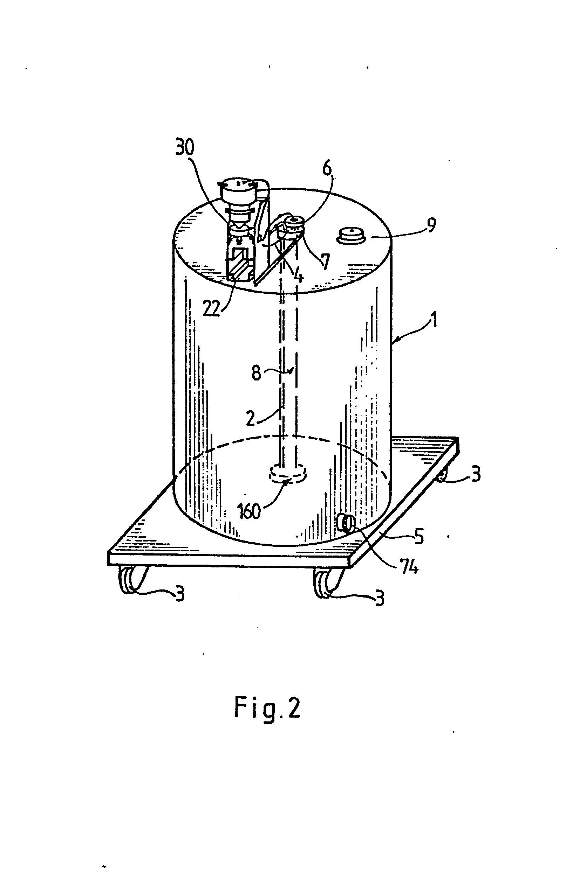

FIGUR 1 zeigt eine Vorrichtung zum Abgeben von loser Milch in Flaschen oder Kannen mit einem im wesentlichen quaderförmigen Schrank 20 aus vorzugsweise nichtrostendem Stahl (V2A), der an an seiner Vorderseite eine Tür 21 aufweist. Die Tür 21 ist an den Seitenwänden des Schranks 20 durch übliche Scharniere 11 angelenkt und durch ein ebenfalls dem Fachmann bekanntes Schloß 12 absperrbar. In der Tür 21 ist eine Flaschenöffnung 23 vorgesehen, die einen im wesentlichen U-förmigen Tisch 22 zum Einschieben einer nicht dargestellten Milchflasche umschließt. Der Tisch 22 ist an einem in Figur 2 gezeigten Milchcontainer 1 befestigt und mit einer Ablauföffnung 100 versehen, durch die überfließende Milch in einen nicht dargestellten Sammelbehälter abfließen kann. In mindestens einer Seitenwand der Flaschenöffnung 23 sind ein oder mehrere Füllstandsensoren 24 angeordnet, welche die Milchabgabe unterbinden, wenn der Füllstand der Milch in einer Milchflasche die Höhe der Füllstandssensoren 24 erreicht. Als Füllstandssensor 24 ist beispielsweise ein Hochfrequenz-Strahler der Firma TURCK FRANCE S.A.R.L. in 91000 EVRY, Frankreich, geeignet.

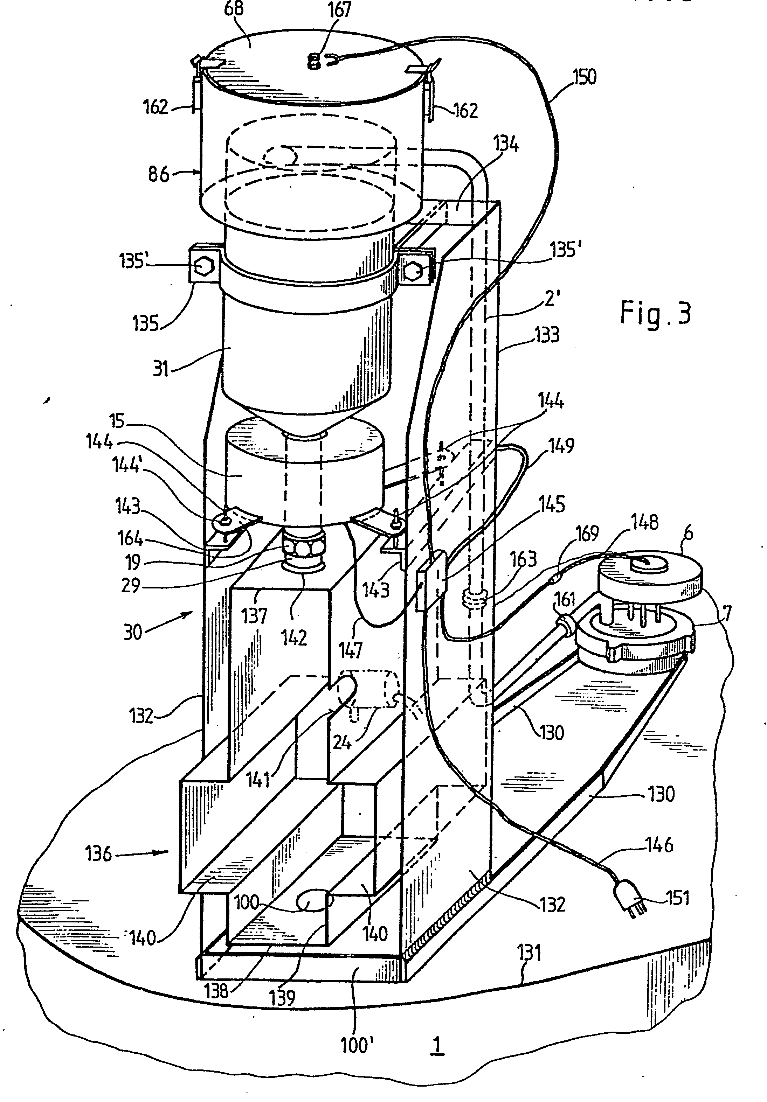

An der Rückwand der Flaschenöffnung 23, die in einer Ausführung von einem in Figur 3 dargestellten Abgabekopf 30 gebildet und mit 133 bezeichnet ist, in einer anderen Ausführung einen Teil der Tür 21 des Schranks 20 bildet, ist ein Flaschenfühler 25 montiert, beispielsweise ein Mikroschalter, dessen Schaltarm aus der Rückwand der Flaschenöffnung 23 vorsteht und durch eine eingeschobene Milchflasche einen Stromkreis schließt. Dadurch wird in einer nicht dargestellten Steuerschaltung die Milchabgabe freigegeben. Zur besseren Sicherung vor unbefugter Benutzung können zwei oder mehrere übereinanderliegende Mikroschalter vorgesehen sein, die wegen ihres Abstandes nicht alle gleichzeitig von einer Hand eines die Vorrichtung nicht sachgemäß betreibenden Benutzers gedrückt werden können, durch eine eingeschobene Milchflasche jedoch ohne Schwierigkeiten betätigbar sind. Über dem Füllstandssensor 24 und dem Flaschenfühler 25 ist in deutlichem Abstand zum Tisch 22 und hinter einer Abschirmung ein Abgabemundstück 29 angeordnet, das von außen mit der Hand nicht berührbar ist und durch das Milch in die in die Flaschenöffnung 23 eingeschobene Milchflasche je nach Betätigung eines ebenfalls in der Tür 21 untergebrachten Wahltasters 26 abgebbar ist. In einer bevorzugten Ausführung sind vier Wahltaster 26 vorgesehen, von denen das Drücken eines Wahltasters das Abfüllen von 1/2, 1, 1 1/2 oder 2 Liter Milch auslöst. Es können aber auch andere Kombinationen für die abzugebenden Milchmengen vorgesehen sein. Mittels der erwähnten Steuerschaltung ist es möglich, die Wahltaster 26 derart nacheinander zu drücken, daß beispielsweise auch 2 1/2 Liter Milch oder ähnliche Kombinationen abgegeben werden können. Über dem Abgabemundstück 29 ist eine Abdeckhaube 28 vorgesehen, deren Vorderwand 28' auf der Tür 21 befestigt ist und die Seitenwände 28" der Abdeckhaube 28 etwas überlappt. Die Rückwand der Abdeckhaube 28 ist in einer Ausführung durch nicht dargestellte Scharniere auf der Deckplatte 27 des Schrankes 20 befestigt und zusammen mit den Seitenwänden 28" bei geöffneter Tür 21 nach hinten schwenkbar. Dadurch wird ein in den Figuren 2 und 3 erkennbarer Abgabekopf 30 zugänglich. Zur Lagestabilisierung der Seitenwände 28" dienen zwei auf der Deckplatte 27 befestigte, nicht dargestellte Stifte, die in zugehörige Bohrungen fassen, die in nach innen gewinkelten Schenkeln der Seitenwände 28" vorgesehen sind. In einer anderen Ausführung ist die Abdeckhaube 28 starr auf der Deckplatte 27 montiert, beispielsweise verschweißt, verschraubt oder vernietet.

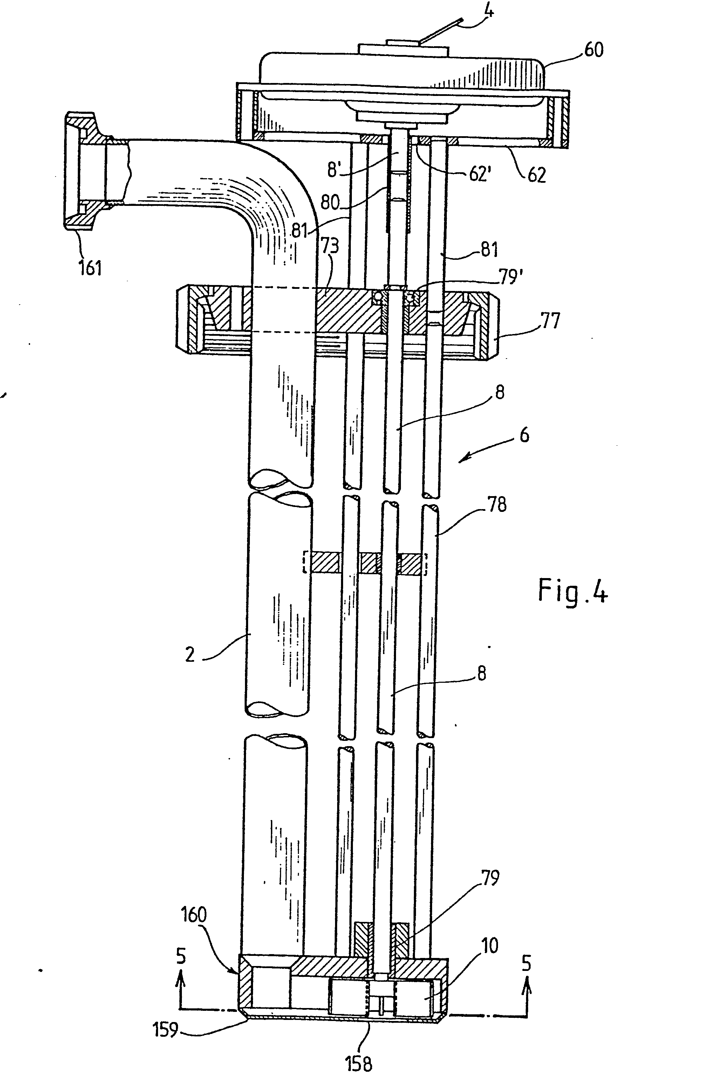

FIGUR 2 zeigt einen fahrbaren Milchcontainer 1, vorzugsweise aus korrosionsbeständigem Edelstahl in Form eines Zylinderkörpers, der auf einer mit Rollen 3 versehenen Grundplatte 5 montiert ist. Der Zylinderkörper des Milchcontainers 1 ist mit der Grundplatte 5 in einer Ausführung verschweißt, in einer anderen Ausführung verschraubt und enthält einen Tank, der in einer Ausführung gegenüber dem Zylinderkörper isoliert ist, und zwar vorzugsweise durch Polyurethanschaum. Wird für eine ausreichende Kühlung des Milchcontainers 1 gesorgt oder wenn darin eine andere Flüssigkeit als Milch aufbewahrt werden soll, so kann die Isolierung auch weggelassen werden. Ein Pumpenflansch 7 ist auf der Oberseite des Milchcontainers 1 angeordnet, der zum Einsetzen und Halten einer Pumpe 6 sowie zum Anschließen einer in Figur 3 erkennbaren Rohrleitung 2 dient. Die Pumpe 6 ist eine Tauchpumpe, die über elektrische Leitungen 4 ansteuerbar ist und mit ihrer Pumpenwelle 8 bis in die Nähe des Bodens des Milchcontainers 1 ragt. Die Pumpe 6 ist in Figur 4 deutlicher erkennbar. Am unteren Ende der Pumpenwelle 8 sitzt ein Saugkopf 160, der die Milch durch eine neben der Pumpenwelle 8 parallel nach oben und durch den Pumpenflansch 7 nach außen führende Rohrleitung 2 fördert. Die meisten Teile des Milchcontainers 1 sind aus hygienischen Gründen aus nichtrostendem Edelstahl hergestellt. Durch die Rollen 3 ist der in der Molkerei keimarm gemachte und anschließend befüllte Milchcontainer 1 bei geöffneter Tür 21 mit dem auf seiner Oberseite angeordneten Abgabekopf 30 in den Schrank 20 schiebbar und ohne Schwierigkeiten an die Elektronik-Steuerung der Vorrichtung anschließbar. Hierzu sind je nach Bauart der Vorrichtung ein oder mehrere Kabelstecker vorgesehen. Ferner ist auf der Oberseite des Milchcontainers 1 ein Reinigungsflansch 9 vorgesehen, während in der Nähe der Grundplatte 5 ein Ablaßflansch 74 in der Seitenwand des Milchcontainers 1 sitzt.

FIGUR 3 zeigt eine vergrößerte perspektivische Darstellung des Abgabekopfs 30, der auf der Oberseite des Milchcontainers 1 montiert ist. Man erkennt in Figur 3 den schematisch dargestellten Pumpenflansch 7 mit eingesetzer Pumpe 6. An den Pumpenflansch 7 sind Träger 130 seitlich angeschweißt, die sich zum Rand 131 des Milchcontainers 1 erstrecken. An ihrem vorderen, vom Pumpenflansch 7 entfernten Ende sind die Träger 130 mit vertikalen Seitenwänden 132 des Abgabekopfs 30 verbunden, und zwar vorzugsweise verschweißt. Die vertikalen Seitenwände 132 sind an ihren hinteren Kanten, die dem Pumpenflansch 7 zugewandt sind, durch eine Rückwand 133 miteinander verbunden. Im Bereich ihres Oberrandes verbindet ein Deckstreifen 134 die Seitenwände 132 miteinander sowie mit der Rückwand 133. Der Deckstreifen 134 trägt eine Schelle 135, die zur Halterung eines Meßzylinders 31 dient. Die Schelle 135 ist ein vorzugsweise aus zwei Halbschalen bestehender Haltebügel, dessen beide Halbschalen auf dem Fachmann bekannte Weise durch Schrauben 135' oder durch Spannverschlüsse miteinander verbindbar sind.

Zwischen den Seitenwänden 132 ist ein Flaschenaufnahmegehäuse 136 untergebracht, das eine Deckwand 137, eine den Tisch 22 von Figur 1 bildende Bodenwand 138 sowie parallele Seitenflächen 139 aufweist. Die Seitenflächen 139 sind durch die Deckwand 137 sowie durch die Bodenwand 138 miteinander verbunden. In die Seitenflächen 139 sind Vertiefungen oder Seitentaschen 140 eingeformt, die Platz für die Hand eines die Milchflasche
einschiebenden oder entnehmenden Benutzers schaffen. Dadurch hat das Flaschenaufnahmegehäuse 136 in der Ansicht die Form eines Kreuzes. Die Seitenwände 132 des
Abgabekopfs 30 liegen an den Seitentaschen 140 an, während sich die Seitenflächen 139 des Flaschenaufnahmegehäuses 136 im Abstand zu den Seitenwänden 132 sowie
parallel zu diesen erstrecken. In einer der Seitenflächen 139 des Flaschenaufnahmegehäuses 136 ist oberhalb der Seitentasche 140 ein Ausschnitt 141 vorgesehen, durch den ein strichpunktiert angedeuteter Füllstandssensor 24 Strahlung zur Prüfung der Sauberkeit
oder Befüllung einer Milchflasche aussenden kann. Zu
diesem Zweck ist der Füllstandssensor 24 an der Innenseite der Tür 21 gehaltert und liegt bei geschlossener
Tür 21 im Bereich des Ausschnitts 141.

In einer anderen, nicht dargestellten Ausführung ohne
den Schrank 20 (Figur 1) ist der Füllstandssensor 24 am
Abgabekopf 30 befestigt.

In der Deckwand 137 ist eine Öffnung 142 für den Durchtritt von Milch aus dem Abgabemundstück 29 in die nicht
dargestellte, eingeschobene Milchflasche vorgesehen.
Ferner weist die Bodenwand 138 die Ablauföffnung 100
für verschüttete Milch auf, die in einer Sammelschale 100' auffangbar ist. Diese Sammelschale 100' ist zusammen mit dem Milchcontainer 1 in der Molkerei reinigbar. In einer Ausführung wird der untere Teil der
Flaschenaufnahmeöffnung 136 durch den in Figur 1 gezeigten Tisch 22 gebildet und erstreckt sich bei in den
Schrank 20 eingeschobenem Milchcontainer 1 durch die geschlossene Tür 21 des Schranks 20.

An den Seitenwänden 132 des Abgabekopfs 30 sind in geringem, vertikalem Abstand über der Deckwand 137 Winkelprofile 143 befestigt, vorzugsweise verschweißt, welche vier senkrecht nach oben ragende Gewindebolzen 144 tragen. Die Gewindebolzen 144 dienen zur Halterung und Höheneinstellung eines Hubmagneten 15.

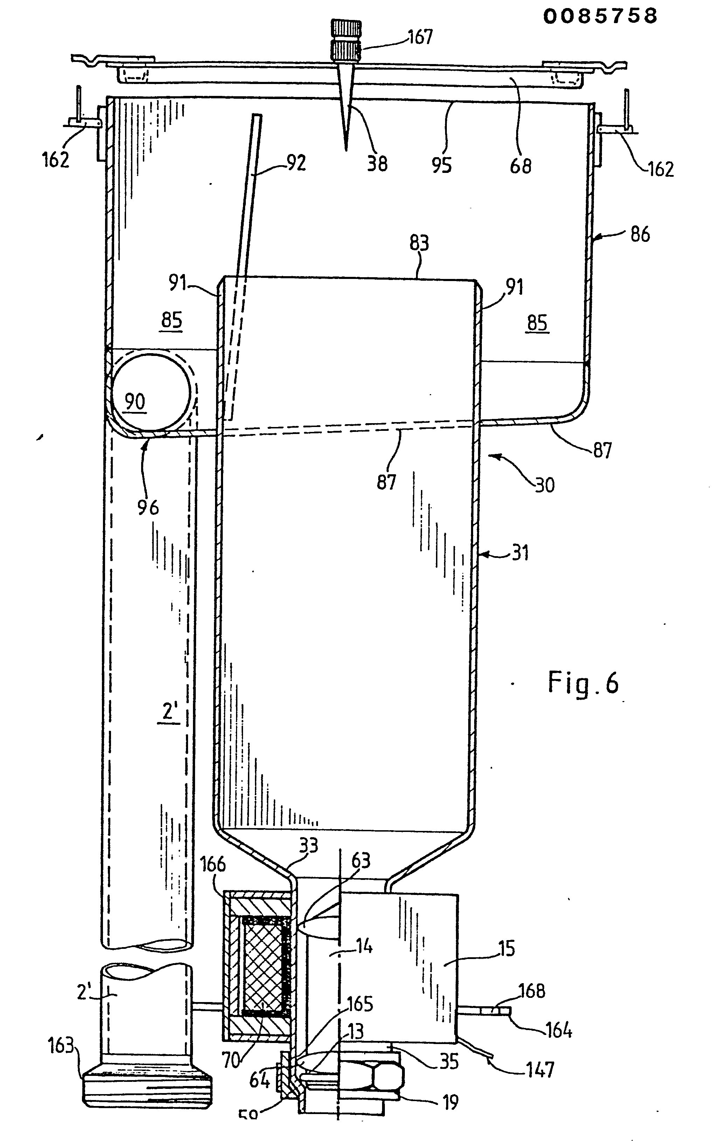

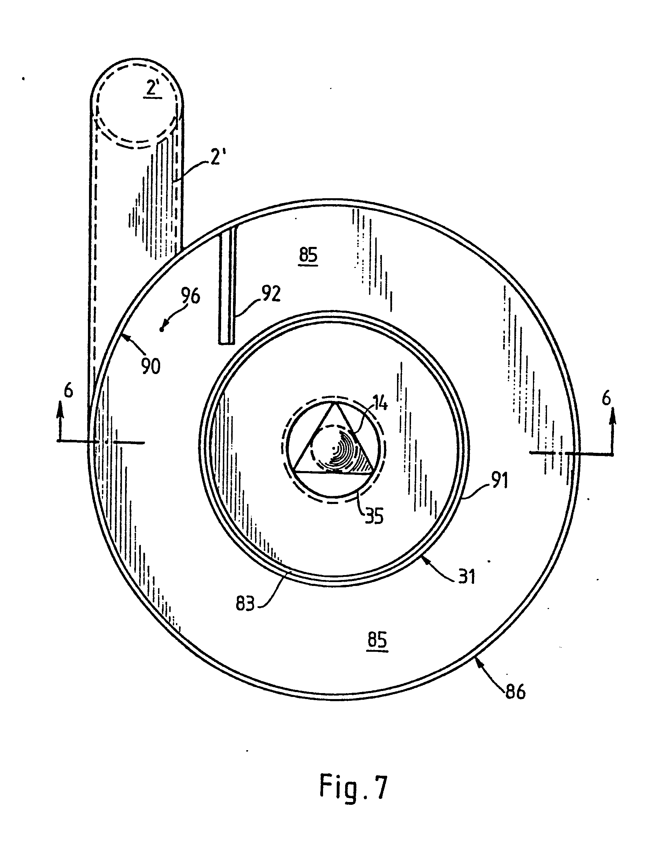

Ferner ist an der Seitenwand 132 des Abgabekopfs 30 eine elektrische Verteilerdose 145 angebracht, in der ein mit einem ersten Stecker 146' versehenes Steuerkabel 146 an die nicht dargestellte Elektroniksteuerung der Vorrichtung anschließbar ist. Die über das Steuerkabel 146 zugeführten Steuerbefehle werden von der Verteilerdose 145 über ein Magnetkabel 147 an den Hubmagneten 15, über ein Pumpenkabel 148 mit einem zweiten Stecker 169 zur Pumpe 6 und über ein Mikroschalterkabel 149 an einen an der Rückwand 133 befestigten Mikroschalter verteilt, wobei der in Figur 3 nicht dargestellte Mikroschalter als Schaltarm den in Figur 1 gezeigten Flaschenfühler 25 aufweist. Schließlich führt noch ein Sondenkabel 150 von der Verteilerdose 145 zu einem Sammelzylinderdeckel 68. Weitere Einzelheiten des Meßzylinders 31 werden anhand der Figuren 6 und 7 erläutert.

FIGUR 4 zeigt die Pumpe 6, die auf den Pumpenflansch 7 (Figuren 2 und 3) des Milchcontainers 1 aufsetzbar ist. Die Pumpe 6 ist mit Stehbolzen 81 im Abstand über einer Containerverschraubung 77 montiert. Die Containerverschraubung 77 umfaßt eine Verschraubungsplatte 73, die auf den Pumpenflansch 7 aufgesetzt und mit der Containerverschraubung 77 befestigt wird. Die Verschraubungsplatte 73 trägt die Stehbolzen 81 und weist eine abgedichtete Durchführung für die Pumpenwelle 8 sowie eine Durchführung für eine Stützstange 78 und eine Rohrleitung 2 auf. Die Stützstange 78 ist in einer Ausführung in die Verschraubungsplatte 73 eingeschweißt. Ebenso ist die Rohrleitung 2 in die Verschraubungsplatte 73 eingeschweißt und bildet dadurch eine Milchleitung, welche die Containerverschraubung 77 durchsetzt. Die Pumpenwelle 8 ist gegenüber der Verschraubungsplatte 73, beispielsweise durch ein Wälzlager oder durch eine andere, bekannte hygienische und lebensmittelrechtlich zugelassene Durchführungseinrichtung abgedichtet.

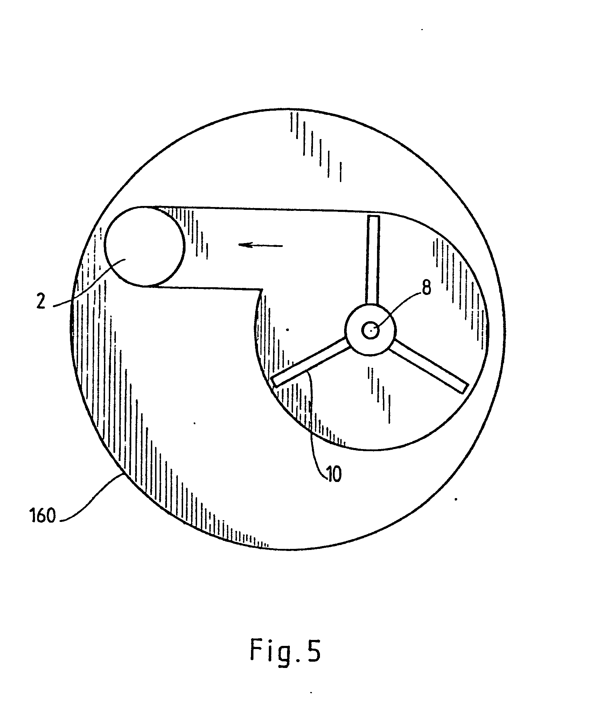

Die Stehbolzen 81, die beispielsweise an den Eckpunkten eines gleichseitigen Dreiecks angeordnet sind, tragen eine Montageplattform 62. Im Abstand über der Montageplattform 62 ist ein Pumpenmotor 60 angebracht, der vorzugsweise ein an sich bekannter Elektromotor von geringer Bauhöhe ist. Derartige Elektromotoren werden durch elektrische Leitungen 4 angesteuert und im allgemeinen als Scheibenmotor bezeichnet. Die Motorwelle 8' des Elektromotors 60 führt durch eine lichte Bohrung 62' in der Montageplattform 62 und ist über eine Wellenkupplung 80, vorzugsweise ein kurzes Schlauchstück, mit der am unteren Ende ein Flügelrad 10 tragenden Pumpenwelle 8 gekoppelt. Die Pumpenwelle 8 führt durch eine Buchse 79, vorzugsweise eine Teflonbuchse, in den Saugkopf 160 mit Deckel 159, an den die Rohrleitung 2 anschließt. Der Saugkopf 160 ist in Figur 5 im Schnitt dargestellt und leitet durch eine Ansaugöffnung 158 im Deckel 159 angesaugte Milch zuerst senkrecht zur Pumpenwelle 8 zu der Rohrleitung 2, in der sie nach oben gedrückt wird, so daß sie parallel zur Pumpenwelle 8 durch die Containerverschraubung 77 aus dem Milchcontainer 1 gefördert wird. Die Rohrleitung 2 ist oberhalb der Containerverschraubung 77 um 90$^{\circ}$ abgewinkelt und endet in einer ersten Rohrverschraubung 161. Gemäß Figur 3 ist an die erste Rohrverschraubung 161 die zum Meßkopf 31 führende Rohrleitung 2' anschließbar. Ein Wälzlager 79' lagert ferner das obere Ende der Pumpenwelle 8 in der Verschraubungsplatte 73.

FIGUR 5 zeigt einen Schnitt entlang der Linie 5-5 in Figur 4, aus der der Förderweg der Milch vom Flügelrad 10 zu der im Abstand daneben mündenden Rohrleitung 2 durch den Pfeil erkennbar ist. Dabei sind gleiche Teile wie in Figur 4 mit den gleichen Bezugszeichen versehen und lediglich der Deckel 159 weggelassen.

FIGUR 6 zeigt eine Schnittansicht des ersten Abgabekopfs 30. Der Abgabekopf 30 weist den in Figur 3 bereits dargestellten Meßzylinder 31 auf, der vorzugsweise aus nichtrostendem Stahl, insbesondere V2A-Stahl, hergestellt ist. Der Oberrand 83 des Meßzylinders 31 ist nach unten und außen abgeschrägt, um die Oberflächenspannung der darüberfließenden Milch zu brechen. Der Boden 33 des Meßzylinders 31 läuft in Richtung auf einen Auslaufstutzen 35 nach unten konisch zu, so daß die in den Meßzylinder 31 eingefüllte Milch bei aktiviertem Hubmagneten 15 durch den Auslaufstutzen 35 vollständig abfließt. In einer Ausführung ist der Rauminhalt des Meßzylinders 31 bei nicht aktiviertem Hubmagneten 15 und damit abgesperrten Abgabemundstück 29 0,5 Liter, in einer anderen Ausführung 1,0 Liter.

Im oberen Drittel des Meßzylinders 31 ist ein Sammelzylinder 86 angebracht, und zwar vorzugsweise mit der Außenwand 91 des Meßzylinders 31 verschweißt. Hierzu weist der Sammelzylinder 86 einen Sammelzylinderboden 87 auf, der an der Berührungsstelle mit dem Meßzylinder 31 an dessen Außenwand 91 angeschweißt ist. Der Sammelzylinderboden 87 schließt mit der Außenwand 91 des Meßzylinders 31 einen Winkel ein, der kleiner als $90^{\circ}$, vorzugsweise $80^{\circ}$ bis $89^{\circ}$ und insbesondere $87,5^{\circ}$ ist. Dadurch weist der zwischen der Außenwand 91 des Meßzylinders 31 und der senkrechten Wand des Sammelzylinders 86 gebildete Ringraum 85 eine tiefste Stelle 96 auf, die einen Sumpf für im Ringraum 85 stehende Milch bildet. An der tiefsten Stelle 96 des Ringraums 85 setzt die Rohrleitung 2' über eine Einlauföffnung 90 an, so daß im Ringraum 85 stehende Milch von dieser tiefsten Stelle 96 durch die Einlauföffnung 90 und die Rohrleitungen 2', 2 zum Milchcontainer 1 zurückfließen kann. Dieses Zurückfließen der Milch aus dem Ringraum 85 des Sammelzylinders 86 erfolgt immer dann, wenn die Pumpe 6 (Figur 4) abschaltet.

Die Rohrleitung 2, 2' ist vorzugsweise ein V2A-Rohr, das von unten kommend seitlich in den Sammelzylinder 86 mit der Einlauföffnung 90 mündet. In einer bevorzugten Ausführung setzt die Rohrleitung 2' mit ihrer Außenwand tangential an den Sammelzylinder 86 an, wie dies in Figur 7 besonders deutlich erkennbar ist. Die Oberkante 95 des Sammelzylinders 86 (Figur 6) befindet sich in deutlichem Abstand über dem Oberrand 83 des Meßzylinders 31, und zwar vorzugsweise in einem solchen Abstand, daß der Oberrand 83 des Meßzylinders 31 etwa auf halber Höhe des Sammelzylinders 86 angeordnet ist. Die Höhe des Sammelzylinders 86 ist vom Fachmann so zu wählen, daß beim Einfüllen von Milch in den Meßzylinder 31 keine Milch aus dem Sammelzylinder 86 herausspritzt. Die Oberkante 95 des Sammelzylinders 86 ist noch durch einen Sammelzylinderdeckel 68, vorzugsweise aus Kunststoff, verschließbar, der gegebenenfalls mit Entlüftungsbohrungen versehen sein kann. Es ist außerdem eine Füllstandssonde 38 vorgesehen. Ob letztere in jedem Fall erforderlich ist, kann der Fachmann ohne Schwierigkeiten beim Betrieb der Vorrichtung feststellen. Der Sammelzylinderdeckel 68 wird durch Schnappverschlüsse 162 auf dem Sammelzylinder gehalten. Zum Anschließen des Sondenkabels 150 (Figur 3) sind Rändelmuttern 167 auf dem Schaft der Füllstandssonde 38 über dem Sammelzylinderdeckel 68 montiert.

Die Rohrleitung 2' ist über eine dem Fachmann bekannte zweite Rohrverschraubung 163 und über ein nicht dargestelltes, bekanntes Knie oder ein Winkelstück an die erste Rohrverschraubung 161 der in Figur 4 gezeigten Pumpe 6 anschließbar. Dies bringt den Vorteil mit sich, daß der Abgabekopf 30 starr auf dem Milchcontainer 1 gemäß den Figuren 2 und 3 montierbar und dadurch ohne Schwierigkeiten in der Molkerei reinigbar ist. Außerdem kann so der Schrank 20 (Figur 1) ganz weggelassen werden, wenn die Wahltaster 26 am Abgabekopf 30 angeordnet sind.

Figur 6 zeigt außerdem den vom Hubmagneten 15 umgebenen Auslaufstutzen 35. Der Auslaufstutzen 35 ist an seinem unteren Ende mit einem Gewinde 165 versehen, auf welches eine Überwurfmutter 19 geschraubt ist, die einen Ventilsitz 59 für einen in den Auslaufstutzen 35 eingesetzten Absperrkörper 14 enthält. Der Absperrkörper 14 besitzt einen von einem V2A-Mantel umgebenen Weicheisenkern und hat einen geringeren Durchmesser als der Innendurchmesser des Auslaufstutzens 35. Dadurch ist zwischen der Innenwand des Auslaufstutzens 35 und der Außenwand des Absperrkörpers 14 ein Ringraum gebildet, durch den bei vom Ventilsitz 59 abgehobenem Absperrkörper 14 Milch ausströmen kann. Zur Führung des Absperrkörpers 14 sind obere Führungsvorsprünge 63 und untere Führungsvorsprünge 64 vorgesehen, welche in einer Ausführung die Ecken eines Dreiecks, in einer anderen Ausführung die Ecken eines Quadrats bilden. Es sind jedoch auch anders angeordnete Führungsvorsprünge denkbar. Am unteren Ende des Absperrkörpers 14 ist eine Ventildichtung 13 in eine Nut eingesetzt, und zwar in einer bevorzugten Ausführung ein O-Ring. Es sind jedoch auch andere Dichtungsarten möglich, die dem Fachmann ohne weiteres zur Verfügung stehen. Der Absperrkörper 14 liegt durch sein Eigengewicht mit der Ventildichtung 13 normalerweise auf dem Ventilsitz 59 und sperrt somit den Auslaß des Meßzylinders 31 ab.

Wie in den Figuren 3 und 6 erkennbar, ist der Auslaufstutzen 35 durch eine Zentralbohrung des Hubmagneten 15 gesteckt, so daß der Hubmagnet 15 den Auslaufstutzen 35 und den darin eingesetzten Absperrkörper 14 umgibt. Der Hubmagnet 15 weist ein oder mehrere Magnetspulen 70 auf, die in einen Edelstahl-Mantel 166 eingekapselt sind. Aus dem Edelstahl-Mantel 166 führt lediglich das eingegossen abgedichtete Magnetkabel 147 nach außen, das über die in Figur 3 erkennbare Verteilerdose 145 an die nicht dargestellte elektronische Steuerschaltung anschließbar ist. Um den Edelstahl-Mantel 166 sind vier Beine 164 angeschweißt, die in der Nähe ihrer äußeren Enden Bohrungen 168 für die Aufnahme der Gewindebolzen 144 aufweisen.

FIGUR 7 zeigt den Abgabekopf 30 aus Figur 6 in der Draufsicht, wobei gleiche Teile mit gleichen Bezugszeichen wie in Figur 6 bezeichnet sind und vorn ein Umlenkblech 92 erkennbar ist, das als etwa senkrechte Wand in den Ringraum 85 ragt und die Schaumbildung der Milch reduziert. Da beim Füllen des Meßzylinders 31 die Milch bei laufender Pumpe 6 durch die Rohrleitung 2' tangential durch die Einlauföffnung 90 in den Ringraum 85 zwischen dem Meßzylinder 31 und dem Sammelzylinder 86 einströmt, besteht zunächst eine Neigung zur Bildung einer Zirkulationsströmung um den Meßzylinder 31. Dem wirkt das Umlenkblech 92 entgegen, das in der dargestellten bevorzugten Ausführung an der Wand des Sammelzylinders 86 neben der Einlauföffnung 90 ansetzt und sich parallel zur Rohrleitung 2' zum Meßzylinder 31 erstreckt, jedoch im Abstand vor dessen Außenwand 91 sowie im Abstand zum Sammelzylinderboden 87 endet. In bezug auf die Vertikale ist das Umlenkblech 92 leicht geneigt montiert, und zwar zwischen 2 und 10$^{\circ}$, vorzugsweise 3$^{\circ}$.

Das Füllen des Meßzylinders 31 erfolgt nun dadurch, daß bei nicht aktiviertem und in Figur 6 dargestelltem Hubmagneten 15 die in Figur 4 dargestellte Pumpe 6 Milch aus dem Milchcontainer 1 in einer von der nicht dargestellten elektronischen Steuerung vorgegebenen Menge durch die Rohrleitungen 2, 2' in den Sammelzylinder 86 fördert. Die von der Pumpe 6 geförderte Milch steigt dabei an der Außenwand 91 des Meßzylinders 31 hoch und fließt über dessen Oberrand 83 in das Innere des Meßzylinders 31. Nach einer von der elektronischen Steuerung vorgegebenen Zeit schaltet die Pumpe 6 ab. Sie hat in der Zwischenzeit etwas mehr Milch in den Sammelzylinder 86 gefördert, als der Meßzylinder 31 faßt. Sobald der Meßzylinder 31 vollständig gefüllt und überschüssige Milch in den Ringraum 85 abgeflossen ist, also wenn die Milch bis zum Oberrand 83 steht, sammelt sich im Ringraum 85 verbliebene Milch an der tiefsten Stelle 96 des Sammelzylinderbodens 87 und fließt durch die Einlauföffnung 90 und die Rohrleitung 2', 2 in den Milchcontainer 1 zurück. Da sich das Umlenkblech 92 nicht bis zur Außenwand 91 des Meßzylinders 31 und bis zum Sammelzylinderboden 87 erstreckt, sammeln sich keine Milchreste in Ecken des Ringraums 85, sondern fließen zu dessen tiefster Stelle 96 und von dort in die Rohrleitung 2' ab.

Die Montage der erfindungsgemäßen Vorrichtung wird im folgenden unter Bezugnahme auf Figur 3 näher erläutert:

Zunächst wird der Hubmagnet 15 mit seinen Armen 164 auf die Gewindebolzen 144 gesetzt und in einer Ausführung durch Muttern 144' in einer gewünschten Höhe befestigt. Daraufhin wird der Meßzylinder 31 mit seinem Auslaufstutzen 35 bei abgenommener Überwurfmutter 19 durch den Hubmagneten 15 gesteckt und mit der Schelle 135 derart ausgerichtet befestigt, daß seine Rohrleitung 2' über die Rohrverschraubungen 163 und 161 an die am Pumpenflansch 7 eingesetzte Pumpe 6 anschließbar ist. Nach dem Festziehen der Rohrverschraubungen 161 und 163 wird die Schelle 135 festgezogen und die Höhe des Hubmagneten 15 mit Hilfe der Muttern 144' der Gewindebolzen 144 nachgestellt. Hierauf wird die Überwurfmutter 19 mit dem Ventilsitz 59 von unten an den Auslaufstutzen 35 geschraubt. Dann wird der Absperrkörper 14 von oben in den Auslaufstutzen 35 eingesetzt und danach kann der Sammelzylinderdeckel 68 auf den Sammelzylinder 86 gesetzt und mit Hilfe der Spannverschlüsse 162 gesichert werden. Zum Anschließen der Füllstandssonde 38 wird das Sondenkabel 150 zwischen den Rändelmuttern 167 an dem Sammelzylinderdeckel 68 festgeklemmt. Danach erfolgt die Verbindung der Pumpe 6 mit der elektronischen Steuerschaltung durch Zusammenstecken des zweiten Steckers 169 im Pumpenkabel 148. Nachdem auch das Magnetkabel 147 in der Verteilerdose 145 ordnungsgemäß angeklemmt oder angesteckt ist, kann die Verbindung des Abgabekopfs 30 mit der elektronischen Steuerschaltung durch Einstecken des Steuerkabels 146 bewirkt werden.

Es wird darauf hingewiesen, daß der Milchcontainer 1 in der in Figur 2 erkennbaren Form, also mit vollständig an die Pumpe 6 angeschlossenem Abgabekopf 30 aus dem Schrank 20 in die Molkerei zurücktransportiert und dort gereinigt werden kann. Hierzu ist lediglich nach dem Öffnen der Tür 21 des Schranks 20 die Steckverbindung des Steuerkabels 146 an der elektronischen Steuerschaltung zu lösen.

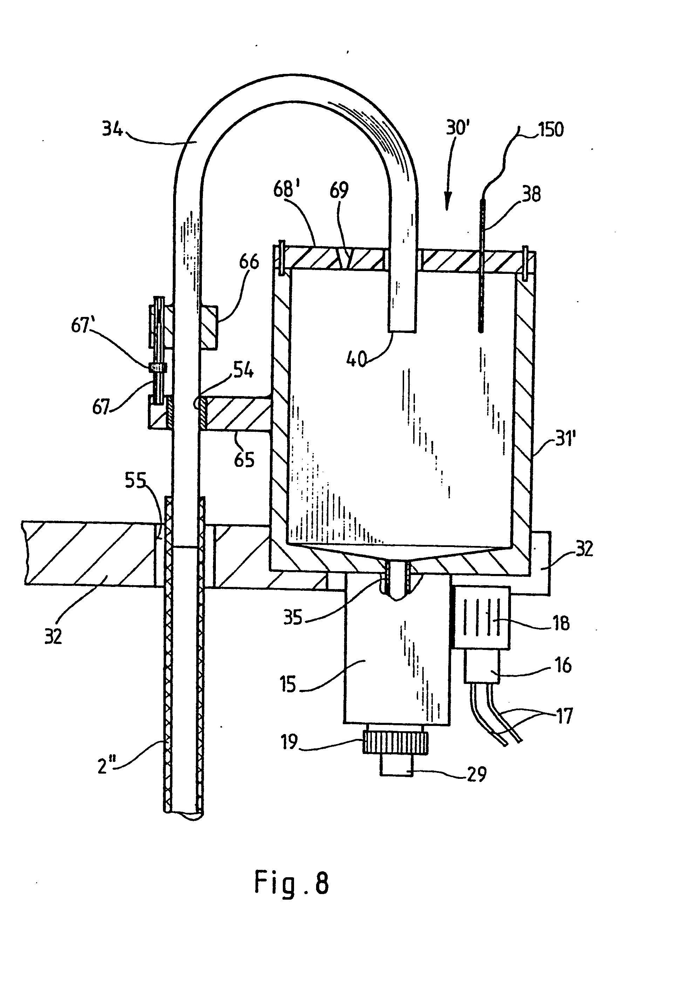

FIGUR 8 zeigt ein zweites Ausführungsbeispiel des in Figur 3 dargestellten Abgabekopfs 30, wobei gleiche Teile mit gleichen Bezugszeichen versehen sind. Der Abgabekopf 30' weist wiederum einen Meßzylinder 31' auf, der in einen Halteflansch 32 einhängbar ist. Der Halteflansch 32 ist auf der Deckplatte 27 des in Figur 1 dargestellten Schranks 20 unter der Abdeckhaube 28 in an sich bekannter Weise im Abstand montiert, beispielsweise durch Stützwände, Seitenträger, Profilschienen o.ä. Er ist mit einer Durchführung 55 für den zum Milchcontainer 1 (Figur 2) führenden Schlauch 2" versehen. An der Wand des Meßzylinders 31' ist ein Träger 65 angebracht, und zwar in dem dargestellten Ausführungsbeispiel vorzugsweise angeschweißt. Der Träger 65 weist eine Bohrung 54 auf, in der eine Führungsbuchse sitzt. Durch die Bohrung 54 des Trägers 65 erstreckt sich ein umgekehrt U-förmiger Einlaufstutzen 34 mit ungleichlangen Schenkeln, auf dessen unter dem Träger 65 liegendes Ende der zum Milchcontainer 1 führende Schlauch 2" gesteckt ist. Das andere Ende des Einlaufstutzens 34 ragt von oben durch eine Öffnung in einem Meßzylinderdeckel 68' frei in den Meßzylinder 31'. Im Abstand über dem Träger 65 ist auf dem außerhalb des Meßzylinders 31' liegenden Schenkel des Einlaufstutzens 34 ein Rohrflansch 66 aufgebracht, vorzugsweise aufgeschweißt, der mit einer Stellschraube 67 mit dem Träger 65 verbunden ist. Die Stellschraube 67 ist beispielsweise im Träger 65 drehbar gehaltert und dreht sich in einer Gewindebohrung des Rohrflansches 66. Eine auf der Stellschraube 67 sitzende Rändelmutter 67' erleichtert das Erfassen und Verstellen der Stellschraube 67, wodurch der Rohrflansch 66 in seinem Abstand gegenüber dem Träger 65 verstellbar ist. Dadurch verändert sich auch die Höhe bzw. Tiefe des in den Meßzylinder 31' hineinragenden freien Endes des Einlaufstutzens 34.

Der Meßzylinder 31' ist in der dargestellten zweiten Ausführung durch einen Meßzylinderdeckel 68' aus Kunststoff abgedeckt, der eine sich nach außen, vom Innenraum des Meßzylinders 31' weg erweiternde Entlüftungsbohrung 69 aufweist. Im Meßzylinderdeckel 68 ist außerdem eine Füllstandssonde 38 gehaltert, die durch eine elektrische Leitung 150 mit der nicht dargestellten elektronischen Steuerung verbunden ist. Durch Höheroder Tieferstellen des Einlaufstutzens 34 mit Hilfe der Stellschraube 67 läßt sich die Menge der in den Meßzylinder 31' einzufüllenden Milch regeln. Sobald die eingefüllte Milch das freie Ende 40 des Einlaufstutzens 34 verschließt, wird ihre Zufuhr unterbrochen. Das Einfüllen von Milch in den Meßzylinder 31' erfolgt bei abgesperrtem Abgabemundstück 29, das durch einen Hubmagneten 15 absperrbar ist.

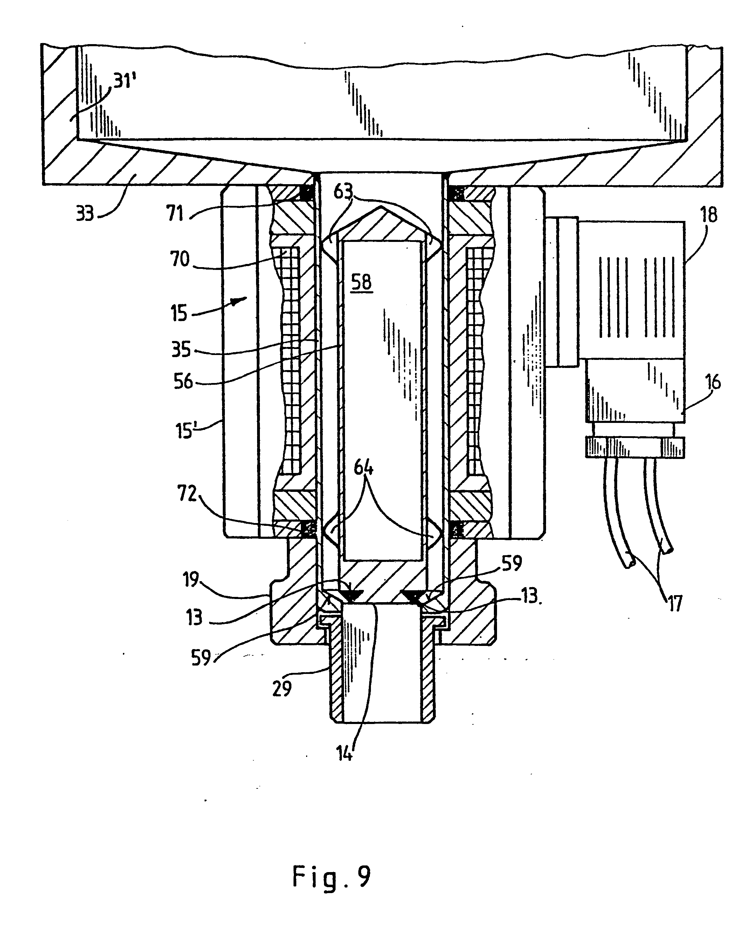

FIGUR 9 zeigt den Hubmagneten 15 in Einzelheiten, und zwar in teilweise geschnittener Darstellung nach der Montage am Meßzylinder 31'. Der Meßzylinder 31' besitzt wiederum einen konisch zulaufenden Boden 33, an dessen tiefster Stelle der Auslaufstutzen 35 ansetzt. Der Auslaufstutzen 35 ist vorzugsweise mit dem Boden 33 verschweißt. Das untere Ende des Auslaufstutzens 35 geht in das Abgabemundstück 29 über, und zwar über eine einen Ventilsitz 59 bildende Schulter. In den Auslaufstutzen 35 ist der Absperrkörper 14 eingesetzt, der aus
einem eingeschweißten Weicheisenkern 58 mit einem Mantel 56 aus Edelstahl besteht. Der im wesentlichen zylindrische Absperrkörper 14 weist an seinem oberen Ende
obere Führungsvorsprünge 63 und an seinem unteren Ende
untere Führungsvorsprünge 64 auf, die den Absperrkörper
14 im Auslaufstutzen 35 führen. Zwischen dem Mantel 56
des Absperrkörpers 14 und der Innenwand des Auslaufstutzens 35 ist ein Ringraum gebildet, durch den Milch
aus dem Meßzylinder 31' bei von dem Ventilsitz 59
abgehobenem Absperrkörper 14 ausfließen kann. Die Dichtung des Absperrkörpers 14 gegenüber dem Ventilsitz 59
wird durch eine Ventildichtung 13 bewirkt, die als
Kunststoffring in das untere Ende des Absperrkörpers 14
eingesetzt ist.

Über den Auslaufstutzen 35 ist ein Hubmagnet 15 gesteckt, dessen Magnetspule 70 den Auslaufstutzen 35 und
den darin axial verschiebbaren Absperrkörper 14 umgibt.
Am oberen Ende des Hubmagneten 15 ist ein oberer Dichtungsring 71 eingelegt, der diesen gegenüber dem Boden
33 des Meßzylinders 31' abdichtet. Am unteren Ende des
Hubmagneten 15 ist ein unterer Dichtungsring 72 vorgesehen, der von einer von unten auf den Auslaufstutzen 35
geschraubten Überwurfmutter 19 gehalten wird. Dadurch
ist der Hubmagnet 15 am Meßzylinder 31' befestigt,
wobei die beiden Dichtungsringe 71 und 72 nicht nur zur
Abdichtung, sondern auch zur Aufnahme von Schwingungen
dienen. Die Ansteuerung des Hubmagneten 15 erfolgt über
eine seitlich daran angesetzte, an sich bekannte Gerätesteckdose 18 mit zugehöriger Kabelverschraubung 16, in
welche Anschlußkabel 17 für die Magnetspule 70 hineinführen. Bei stromloser und damit nicht erregter Magnetspule 70 ruht der Absperrkörper 14 mit seiner Ventildichtung 13 aufgrund seines Eigengewichts auf dem Ventilsitz 59 und sperrt den Auslaufstutzen 35 ab. In diesem Zustand wird der Meßzylinder 31' befüllt. Nach dem Füllen mit Milch wird nach einer kurzen Beruhigungszeit von wenigen Sekunden, in der die Blasenbildung der Milch abklingen soll, der Hubmagnet 15 durch Einleiten von Strom in die Magnetspule 70 aktiviert. Die stromdurchflossene Magnetspule 70 wirkt als Elektromagnet und hebt den Absperrkörper 14 vom Ventilsitz 59 ab, so daß die im Meßzylinder 31' stehende Milch durch das Abgabemundstück 29 ausfließen kann.

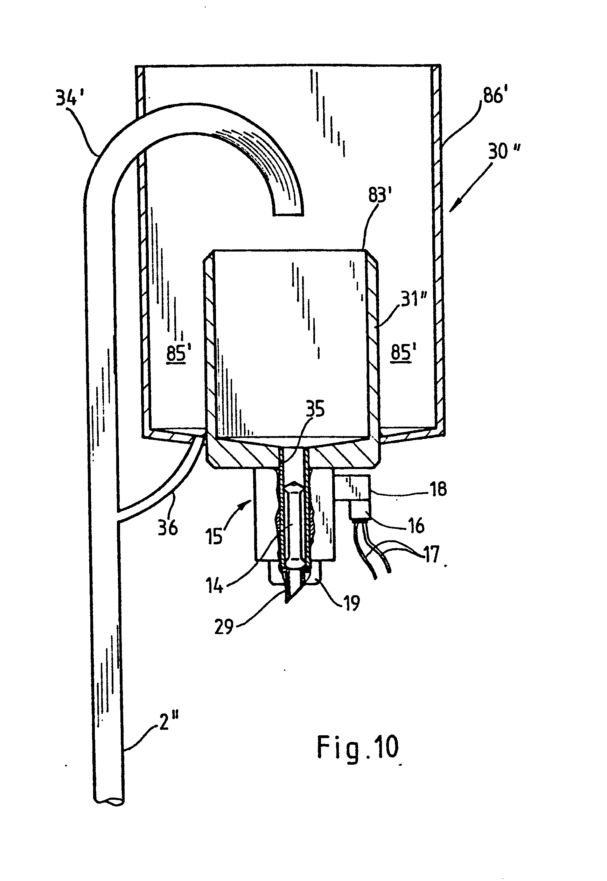

FIGUR 10 zeigt ein weiteres Ausführungsbeispiel des Abgabekopfs 30, bei dem der dritte Abgabekopf 30" aus zwei ineinandergesetzten Gefäßen aufgebaut ist. Das innere Gefäß ist der Meßzylinder 31", der beispielsweise die kleinste abzugebende Milchmenge erfaßt. Der Oberrand 83' des Meßzylinders 31" bildet eine scharfe Kante, die von oben nach außen abgeschrägt ist. Dadurch wird die Oberflächenspannung der Milch gebrochen, die wesentlich größer als bei Wasser ist. Der Meßzylinder 31" wird von einem Sammelzylinder 86' umgeben, dessen Boden mit der Wand des Meßzylinders 31" verbunden, vorzugsweise verschweißt ist. Über den Oberrand 83' aus dem Meßzylinder 31" abfließende Milch sammelt sich daher in dem Ringraum 85' zwischen der Wand des Sammelzylinders 86' und des Meßzylinders 31". Aus diesem Ringraum 85' kann die Milch durch ein Überlaufrohr 36 in die Rohrleitung 2" abfließen. Die Rohrleitung 2" hat einen wesentlich größeren Querschnitt als das Überlaufrohr 36 und geht an ihrem oberen Ende in einen Einlaufstutzen 34' über, der sich durch die Wand des Sammelzylinders 86 über den Meßzylinder 31" erstreckt. Vorzugsweise ist der Einlaufstutzen 34' in die Wand des Sammelzylinders 86' eingeschweißt. Aufgrund des größeren Querschnitts der Rohrleitung 2" und des Einlaufstutzens 34' wird bei Betätigung der Pumpe 6 (Figur 4) die Milch hauptsächlich durch den Einlaufstutzen 34' von oben in den Meßzylinder 31" gepumpt, der dabei zunächst noch durch den Absperrkörper 14 des zuvor erwähnten Hubmagneten 15 abgesperrt ist. Es ist klar, daß der Sammelzylinder 86' mit einer zweckmäßigen Abdeckung versehen sein kann, beispielsweise mit einem Kunststoffdeckel, der mit dem Sammelzylinder 86' verstiftet ist oder dessen Rand in Führungen o.ä. übergreift. Ein geeigneter Deckel ist der in Figur 6 dargestellte Sammelzylinderdeckel 68. Hinsichtlich des Sammelzylinders 86', des Meßzylinders 31" und des Hubmagneten 15 entspricht der dritte Abgabekopf 30" in etwa dem in Figur 6 dargestellten ersten Abgabekopf 30.

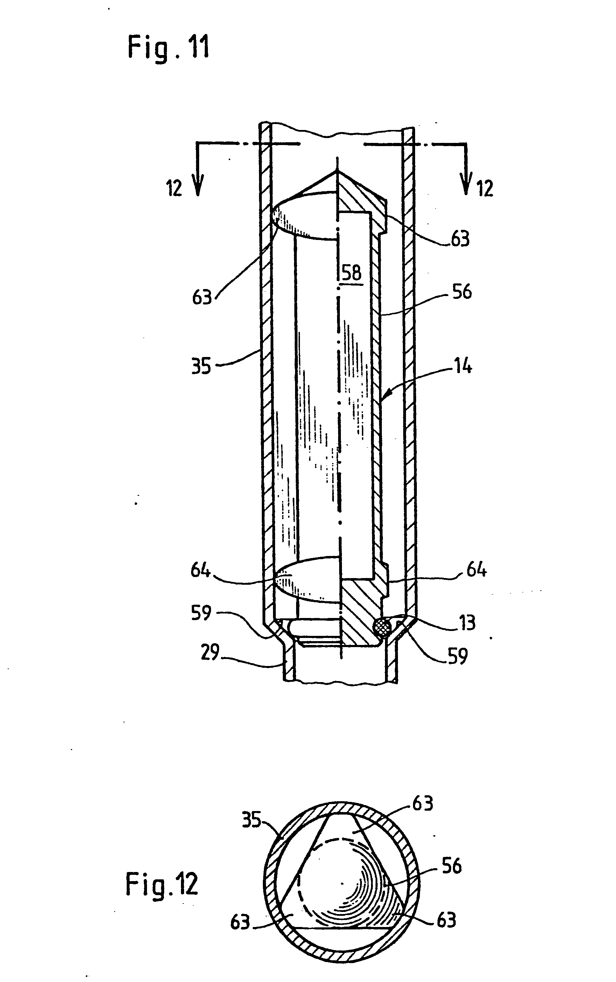

FIGUR 11 zeigt eine zweckmäßige Ausgestaltung des Absperrkörpers 14 für den Hubmagneten 15 (Figuren 3 und 7 bis 10). Der Absperrkörper 14 hat in dieser Ausführung einen zylindrischen Mittelteil mit eingeschweißtem Weicheisenkern 58. Umgeben ist der Weicheisenkern 58 von einem Mantel 56 aus V2A-Stahl, der eine hygienische Milchabfüllung ermöglicht. Die Führung des Absperrkörpers 14 im Auslaufstutzen 35 erfolgt durch die oberen und unteren Führungsvorsprünge 63 und 64, die in einer Ausführung in der Draufsicht die Form eines Dreiecks gemäß Figur 12 haben und einen guten Durchtritt von Milch zwischen der Wand des Auslaufstutzens 35 und dem Mantel 56 des Absperrkörpers 14 gestatten. Am unteren Ende des Absperrkörpers 14 ist ein O-Ring 13 in eine Nut eingesetzt, der den zugehörigen Ventilsitz 59 im Auslaufstutzen 35 bei deaktivierter Magnetspule 70 (Figur 6 und 9) absperrt.

FIGUR 12 zeigt einen Schnitt durch den Auslaufstutzen 35 entlang der Linie 12-12 in Figur 11, wobei die Dreiecksform der Führungsvorsprünge 63 und der Ringraum für das Ausströmen der Milch deutlich erkennbar sind.

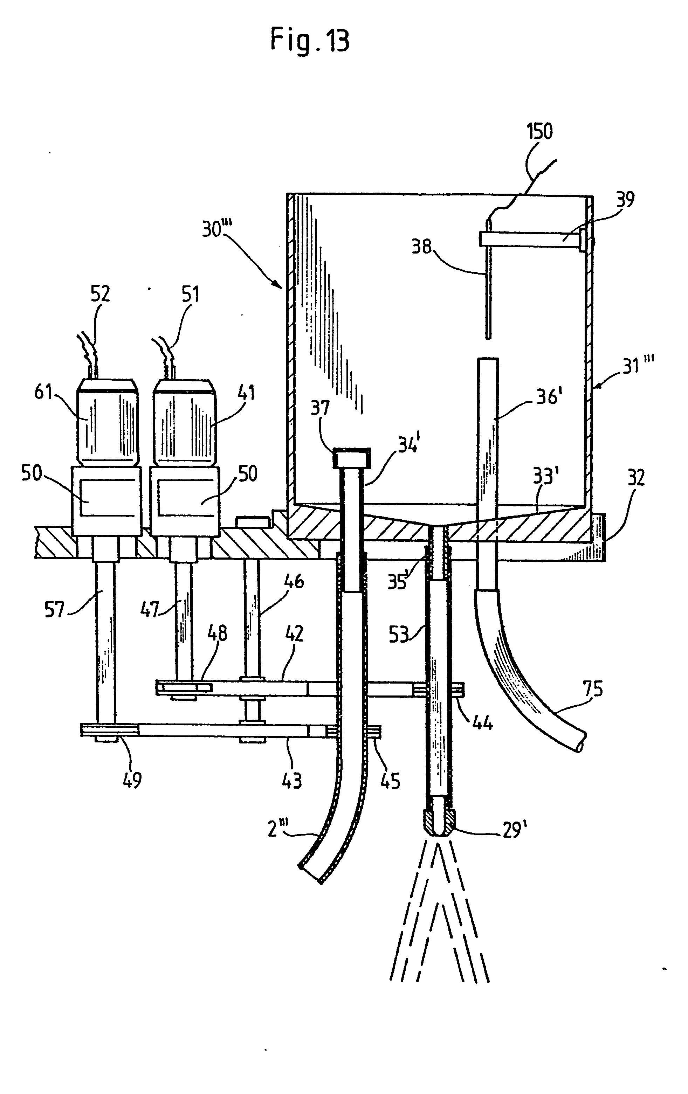

FIGUR 13 zeigt einen Teilschnitt durch ein weiteres Ausführungsbeispiel des Abgabekopfs 30, der unter der Abdeckhaube 28 des Schranks 20 (Figur 1) untergebracht ist. Der vierte Abgabekopf 30"' weist einen becherartigen Meßzylinder 31"' mit verhältnismäßig dickem Boden 33" auf, der zur Mitte hin geneigt ist. In der Zylinderachse des Meßzylinders 31"' ist eine Auslaufbohrung mit angeschlossenem Auslaufstutzen 35' vorgesehen, welche die Abgabe von Milch zu dem Abgabemundstück 29' gestattet. Das Abgabemundstück 29' ist mit dem Auslaufstutzen 35' durch ein Schlauchstück 53 verbunden, das ebenfalls aus Kunststoff besteht. Bezeichnet man die der Tür 21 des Schranks 20 (Figur 1) zugewandte Seite des Meßzylinders 31"' als vorn, so liegt dementsprechend hinter dem Auslaufstutzen 35' zwischen diesem und der senkrechten Wand des Meßzylinders 31"' ein senkrecht stehender Einlaufsutzen 34', der sich sowohl nach innen als auch nach außen über den Boden 33' erstreckt und im Inneren des Meßzylinders 31"' mit einer Kappe 37 versehen ist, welche die einströmende Milch in Richtung auf den Boden 33" umlenkt und damit ein Herausspritzen der Milch aus dem Meßzylinder 31"' bei ihrer Zufuhr durch den auf den Einlaufstutzen 34' aufgesteckten Schlauch 2"' verhindert. Seitlich neben dem Auslaufstutzen 35 ist im Meßzylinder 31"' ein Überlaufrohr 36' angeordnet, das sich ebenfalls durch den Boden 33" des Meßzylinders 31"' erstreckt und auf dessen unteres Ende ein Überlaufschlauch 75 aufgesteckt ist, der überschüssige Milch aus dem Meßzylinder 31"' in einen nicht dargestellten Sammelbehälter ableitet. Über dem Überlaufrohr 36' ist die Füllstandssonde 38 angeordnet, die in einem Sondenträger 39 aus Teflon® gegenüber der Wand des Meßzylinders 31"' gehaltert ist und an ihrem oberen Ende das zu der nicht dargestellten elektronischen Steuerung führende Sondenkabel 150 aufweist.

Mit Hilfe der Füllstandssonde 38 wird ein zu hoher Milchstand im Meßzylinder 31"' erkannt, wodurch ein Zulauf von Milch durch den Schlauch 2"' auf weiter unten dargestellte Weise unterbunden und der Ablauf durch den Auslaufstutzen 35' noch solange gesperrt gehalten wird, bis alle überschüssige Milch durch das Überlaufrohr 36' und den Überlaufschlauch 75 abgeflossen ist. Gleichzeitig mit dem Sperren des Milchzulaufs und der Milchabgabe vom Abgabemundstück 29' wird die Pumpe 6 (Figuren 2 bis 4) deaktiviert, so daß keine weitere Förderung von Milch durch den Schlauch 2'" zum Meßzylinder 31"' erfolgt.

Der Meßzylinder 31"' sitzt in dem Halteflansch 32, der beispielsweise aus Teflon® besteht und der einen nach vorn offenen Schlitz zum Einschieben der Schläuche 2"', 53 und 75 aufweist. Der Halteflansch 32 ist durch nicht dargestellte Abstandsstücke im Abstand über der Deckplatte 27 des Schranks 20 (Figur 1) montiert und trägt hinter dem Meßzylinder 31"' zwei Elektromotoren 41 und 61 mit Getrieben 50, die senkrecht montiert sind und mit Exzenterwellen 47 und 57 zwei im Abstand übereinanderliegende Exzenternocken 48 und 49 treiben. Die Ansteuerung der Elektromotoren 41 und 61 erfolgt über elektrische Leitungen 51 und 52. Die Getriebe 50 sind in einer Ausführung Planetengetriebe. Es ist jedoch klar, daß auch andere, dem Fachmann bekannte und zur Steuerung der Exzenternocken 48 und 49 geeignete Getriebe verwendbar sind.

In Figur 13 sind die Elektromotoren 41 und 61 hintereinander montiert dargestellt, sie können aber auch nebeneinander angeordnet sein. Die beiden Exzenterwellen 47
und 57 wirken auf die Exzenternocken 48 und 49 von
einer ersten und einer zweiten Zange 42 und 43, von
denen die erste Zange 42 als obere Zange mit ihren
Klemmbacken 44 das zum Abgabemundstück 29' führende
Schlauchstück 53 bei Betätigung der Exzenternocke 48
durch Quetschung absperrt. In ähnlicher Weise sperren
die Klemmbacken 45 der zweiten oder unteren Zange 43
bei Betätigung der Exzenternocke 49 den zum Einlaufstutzen 34' führenden Schlauch 2"' durch Quetschung ab,
so daß keine Milch in den Meßzylinder 31"' fließen
kann. Die erste und zweite Zange 42 und 43 sind an
einer Zangenachse 46 im Abstand zum Halteflansch 32 und
damit unter den Elektromotoren 41 und 61 montiert, wobei die Exzenternocken 48 und 49 die hinteren Enden der
ersten und zweiten Zange 42 und 43 auseinanderdrücken
und dadurch die Klemmbacken 44 bzw. 45 schließen. Es
ist klar, daß das Schließen der Klemmbacken 44 und 45
jedoch auch auf jede andere, dem Fachmann geläufige
Weise bewirkt werden kann, beispielsweise durch eine
feststehende Klemmbacke, gegen die die jeweils andere
Klemmbacke bewegt wird. An den Klemmnocken 48, 49 sind
außerdem nicht dargestellte Mikroschalter montiert, die
eine Überlastung der Elektromotoren 41, 61 durch rechtzeitiges Abschalten verhindern sollen.

Es wird darauf hingewiesen, daß die erste bzw. obere
Zange 42 im Bereich des Einlaufstutzens 34' ausgenommen
ist, damit die beiden Zangenschenkel den Schlauch 2"'
weder beim Öffnen noch beim Schließen ihrer Klemmbacken 44 und damit bei der Einwirkung auf das Schlauchstück 53 behindern. Eine derartige Ausnehmung ist für
die zweite oder untere Zange 43 hingegen nicht erforderlich, da sie lediglich auf den weiter hinten liegenden Schlauch 2 wirkt.

Durch getrenntes Ansteuern der Elektromotoren 41 und 61 lassen sich somit auch die Zangen 42 und 43 in getrennter Weise steuern, wodurch der Milchzulauf durch den Schlauch 2"' und die Abgabe von Milch durch das Schlauchstück 53 und das Abgabemundstück 29' frei wählbar gesteuert werden können. Die hierfür erforderliche elektronische Steuerschaltung ist nicht Gegenstand der Erfindung, da sie für den Fachmann ohne Schwierigkeit unter Anpassung an die jeweilige Gegebenheiten erstellbar ist.

Der vierte Abgabekopf 30"' mit den an den Meßzylinder 31"' angeschlossenen Schläuchen 2"', 53 und 75 und dem Abgabemundstück 29' wird in Verbindung mit dem Milchcontainer 1 (Figur 2) keimarm verpackt zur Milchabgabevorrichtung transportiert, so daß das Bedienungspersonal nicht mit der Keimarmhaltung des Abgabekopfes 30"' befaßt zu werden braucht. Beim Einschieben des Milchcontainers 1 in den Schrank 20 (Figur 1) wird der aus der keimarmen Verpackung befreite Meßzylinder 31"' bei abgenommener Abdeckhaube 28 des Schranks 20 einfach in den Halteflansch 32 eingehängt, wobei die Schläuche 2"' und 53 zwischen den Klemmbacken 44 und 45 positioniert werden.

In einer anderen, nicht dargestellten Ausführung erfolgt auch der Zulauf der Milch vom Milchcontainer 1 zum Meßzylinder 31"' durch den Überlaufschlauch 75 und das Überlaufrohr 36', das in diesem Fall in ähnlicher Weise wie der Einlaufstutzen 34' mit einer Kappe zur Umlenkung der Milch versehen ist, um ein Herausspritzen der Milch aus dem Meßzylinder 31"' zu verhindern. Bei dem nicht dargestellten Ausführungsbeispiel sind demnach der Einlaufstutzen 34' mit dem Schlauch 2"', die untere Zange 43 und der hintere Elektromotor 61 mit dem Getriebe 50 weggelassen. Dies ergibt eine größere Störsicherheit und einen einfacheren Aufbau als bei dem Ausführungsbeispiel gemäß Figur 13. Das Fördern der Milch erfolgt bei dem nicht dargestellten, weiteren Ausführungsbeispiel lediglich durch die im Milchcontainer 1 montierte Pumpe 6, die entweder eine Tauchpumpe oder jede andere Art von Pumpe ist, welche von der in den Figuren ebenfalls nicht dargestellten elektronischen Steuerung angesteuert wird. Bei Betätigung eines der Wahltaster 26 wird die Pumpe 6 in Bewegung gesetzt und fördert solange Milch durch den Überlaufschlauch 75 in den Meßzylinder 31"', bis die Füllstandssonde 38 in die Milch eintaucht und über das Sondenkabel 150 ein Signal an die nicht dargestellte elektronische Steuerung abgibt, die daraufhin die Pumpe 6 abschaltet. Da der Überlaufschlauch 75 zum Milchcontainer 1 hin offen bleibt und die Zange 42 das Schlauchstück 53 zunächst noch abgesperrt hält, sinkt der Flüssigkeitsstand der Milch im Meßzylinder 31 bis zur Oberkante des Überlaufrohrs 36' ab, wodurch dann automatisch eine geeichte Abgabemenge, vorzugsweise 1/2 Liter Milch, im Meßzylinder 31"' steht. Nach einer in der elektrischen oder elektronischen Steuerung einstellbaren Zeit erfolgt dann über die elektrischen Leitungen 51 die Ansteuerung des Elektromotors 41, der die obere Zange 42 durch Verdrehen der Exzenternocke 48 öffnet und das Schlauchstück 53 zum Abgeben von Milch durch das Abgabemundstück 29 freigibt. Soll mehr als 1/2 Liter Milch abgefüllt werden, so wiederholt die elektronische Steuerung automatisch das Füllen des Meßzylinders 31"' bei geschlossener Zange 42 und das verzögerte Öffnen der Klemmbacken 44 zur nachfolgenden Abgabe von Milch durch das Abgabemundstück 29.

Ein weiteres Ausführungsbeispiel, das in den Figuren nicht dargestellt ist, betrifft die Förderung der Milch aus dem Milchcontainer 1 zum Abgabekopf 30 (Figur 2) mittels Vakuum, das an den Sammelzylinder 86 bzw. den Meßzylinder 31 (Figur 3 und 6) gelegt wird. In diesem Fall ist die Pumpe 6, die in den Ausführungsbeispielen nach den Figuren 2 bis 4 eine Tauchpumpe ist, weggelassen. Stattdessen ist vorzugsweise an den Sammelzylinder 86 eine in den Figuren nicht dargestellte Saugleitung angeschlossen, die zu einer an sich bekannten Saugpumpe führt und vorzugsweise ein Filter für das Auffangen von zufällig angesaugter Milch enthält. Um über die Saugpumpe und die Saugleitung ein hinreichendes Vakuum im Meßzylinder 31 und im Sammelzylinder 86 (Figur 6) erzeugen zu können, muß der Sammelzylinderdeckel 68 den Sammelzylinder 86 dichtend abschließen. Geeignete Dichtungsmaßnahmen sind dem Fachmann bekannt und umfassen beispielsweise eine in eine Vertiefung in der Unterseite des Sammelzylinderdeckels 68 eingelegte elastomere Dichtung, die mittels der Schnappverschlüsse 162 auf die Oberkante 95 des Sammelzylinders 86 gedrückt wird. Um ein Einströmen der Milch in die nicht dargestellte Saugleitung zu verhindern, setzt die Saugleitung zweckmäßigerweise in der Nähe der Oberkante 95 des Sammelzylinders 86 an, und zwar insbesondere diametral gegenüber der Einlauföffnung 90. In einer anderen Ausführung mündet die nicht dargestellte Saugleitung von oben in dem Sammelzylinderdeckel 68.

Die Funktion der mit Vakuum betriebenen Vorrichtung ist folgendermaßen:

Durch einen modifizierten Saugkopf 160 (Figur 2 und 4) und durch die Rohrleitungen 2 und 2' wird Milch aus dem Milchcontainer 1 durch das von der nicht dargestellten Saugpumpe gebildete Vakuum im Sammelzylinder 86 und im Meßzylinder 31 in den Abgabekopf 30 gefördert. Nach einer von einer elektronischen Steuerschaltung voreingestellten Zeit schaltet die nicht dargestellte Saugpumpe ab, wobei alle im Ringraum 85 stehende Milch durch die Einlauföffnung 90 und die Rohrleitung 2' in den Milchcontainer 1 zurückfließt. Die im Meßzylinder 31 bis zu dessen Oberrand 83 stehende Milch kann hingegen nicht abfließen, da zunächst der Hubmagnet 15 deaktiviert ist und der Absperrkörper 14 das Abgabemundstück 29 verschließt. Erst durch Aktivierung des Hubmagneten 15 wird der Absperrkörper 14 angehoben und gibt das Abgabemundstück 29 frei, so daß die im Meßzylinder 31 stehende Milch in der bereits in Verbindung mit anderen Ausführungsbeispielen erläuterten Weise ausströmen kann.

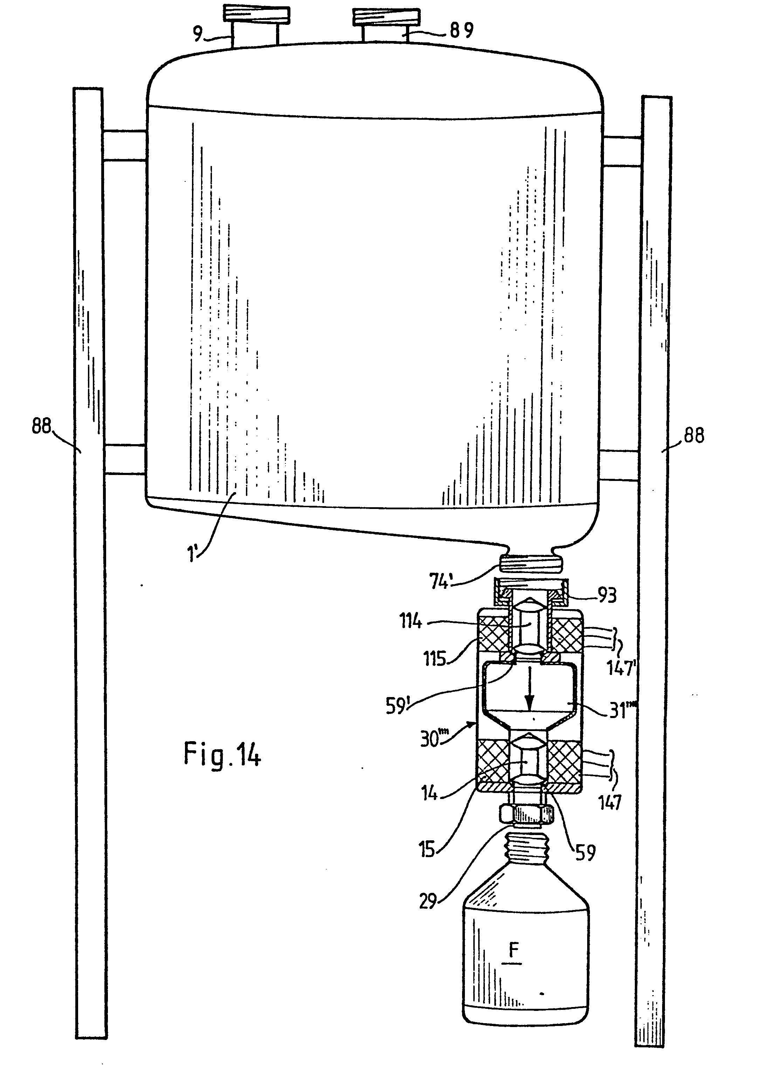

FIGUR 14 zeigt ein fünftes Ausführungsbeispiel eines Abgabekopfs 30"" für eine Milchabfüllvorrichtung, bei der der Milchcontainer 1' im Abstand über dem Erdboden aufgehängt ist und sein Inhalt, also die Milch oder eine andere Flüssigkeit durch den Ablaßflansch 74' unter dem Gewicht der Schwerkraft nach unten ausfließen kann. Der Milchcontainer 1' ist in Streben 88 auf dem Fachmann bekannte Weise aufgehängt, und zwar beispielsweise mit Hilfe von Rollen und Führungen, die durch Hydraulikeinrichtungen derart betätigbar sind, daß der Milchcontainer 1' in den Streben 88 wahlweise sowohl anhebbar, als auch absenkbar ist. Der Milchcontainer 1' hat in einer bevorzugten Ausführung wiederum einen Edelstahl-Mantel, der einen Innentank umschließt, wobei die Zwischenwand zwischen dem nicht dargestellten Innentank und dem Edelstahl-Mantel mit einer Isolierung, beispielsweise Polyurethanschaum ausgefüllt ist. An der Oberseite des Milchcontainers 1' sind ein Reinigungsflansch 9 mit einem Stutzen zum Innentank sowie ein weiterer Stutzen 89 vorgesehen.

Unter dem in den Streben 88 angehobenen Milchcontainer 1' ist der fünfte Abgabekopf 30"" durch eine Flanschüberwurfmutter 93 an den Ablaßflansch 74' anschließbar. Der Abgabekopf 30"" weist an seinem unteren Ende einen ersten Hubmagneten 15 und an seinem oberen Ende einen zweiten Hubmagneten 115 auf, die mit ihren zugehörigen Absperrkörpern 14 und 114 sowohl den Ablauf, als auch den Zulauf von Flüssigkeit, insbesondere Milch, zu dem dazwischenliegenden Meßzylinder 31"" absperren bzw. freigeben. Die beiden Hubmagneten 15 und 115 sowie ihre zugehörigen Absperrkörper 14 und 114 entsprechen vorzugsweise der Ausführung nach den Figuren 6 oder 9. Unter dem ersten Hubmagneten 15 ist wiederum ein Abgabemundstück 29 vorgesehen, durch das Milch bei von seinem zugehörigen Ventilsitz abgehobenem Absperrkörper 14 in eine daruntergestellte Flasche F abfüllbar ist. Die Förderrichtung der Flüssigkeit, beispielsweise der Milch, ist durch den in dem Meßzylinder 31"" eingezeichneten Pfeil angedeutet. Die Ansteuerung der Hubmagneten 15 und 115 erfolgt wie bei dem Ausführungsbeispiel gemäß Figur 6 durch die Magnetkabel 147 und 147' von der nicht dargestellten elektronischen Steuerschaltung.

Für die Abgabe von Milch wird bei Betätigung eines der in Figur 1 dargestellten Wahltaster 26 zunächst der zweite oder obere Hubmagnet 115 über die Magnetkabel 147' aktiviert, wodurch sein Absperrkörper 114 vom Ventilsitz 59' abgehoben wird und Milch aus dem angeflanschten Milchcontainer 1' in den Meßzylinder 31"" strömt. Zu diesem Zeitpunkt ruht der Absperrkörper 14 des ersten Hubmagneten 15 noch auf seinem Ventilsitz 59. Beim Befüllen des Meßzylinders 31"" strömt Luft aus dem Meßzylinder 31"" an dem Absperrkörper 114 vorbei nach oben in den Innentank des Milchcontainers 1' und der zuvor geeichte Meßzylinder 31"" wird bis über den Ventilsitz 59' des oberen Hubmagneten 115 mit Milch gefüllt. Danach wird der zweite Hubmagnet 115 deaktiviert, so daß sein Absperrkörper 114 wieder auf den oberen Ventilsitz 59' fällt und den Meßzylinder 31"" absperrt. Hierauf versorgt die nicht dargestellte elektronische Steuerschaltung die Magnetkabel 147 des ersten oder unteren Hubmagneten 15 mit Strom, so daß das im Hubmagneten 15 entstehende Magnetfeld den Absperrkörper 14 von seinem Ventilsitz 59 abhebt und die im Meßzylinder 31"" gesammelte Milch durch das Abgabemundstück 29 in die daruntergestellte Flasche F abfließen läßt. Zweckmäßigerweise ist wiederum durch Mikroschalter Vorsorge dafür getroffen, daß eine Aktivierung des unteren Hubmagneten 15 nur dann erfolgen kann, wenn sich die Flasche F in richtiger Lage unter dem Abgabemundstück 29 befindet.

Das Ausführungsbeispiel nach Figur 14 hat den Vorteil, daß keine Pumpe zur Förderung der Milch erforderlich ist, da diese unter dem Einfluß der Schwerkraft ausströmt. Dadurch ist die Zahl der zu wartenden und der verschleißenden Teile geringer als bei den vorhergehenden Ausführungsbeispielen. Die Aufstellungs- und Anbringungsart des Milchcontainers 1' ist jedoch komplizierter als bei den vorhergehenden Ausführungsformen.

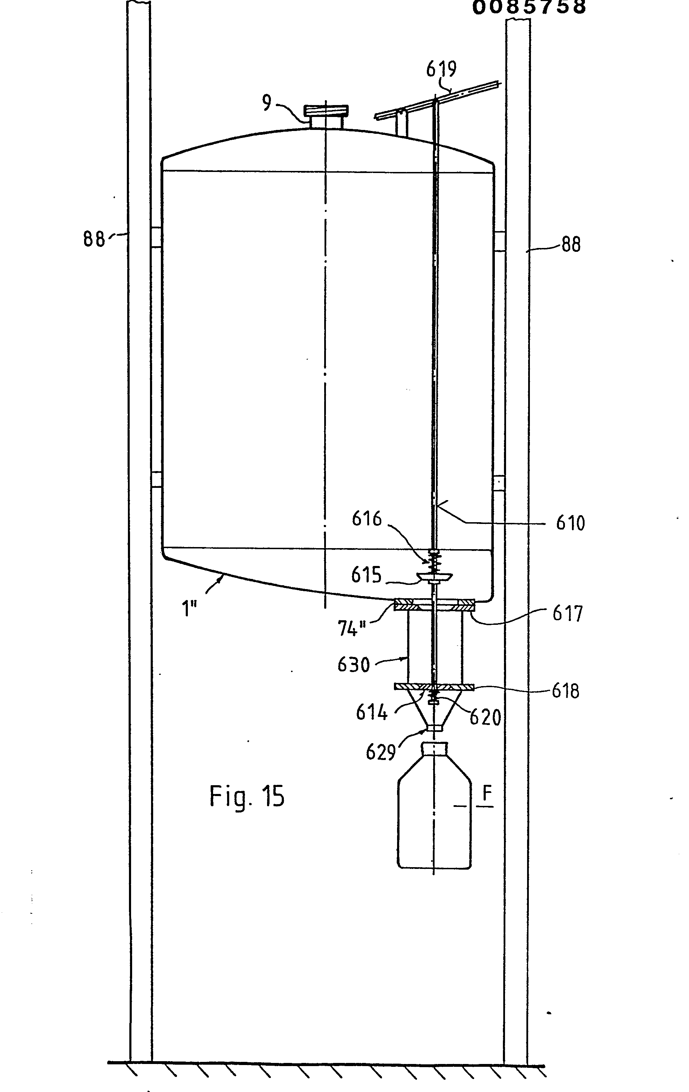

FIGUR 15 zeigt ein sechstes Ausführungsbeispiel eines Abgabekopfs 630, der wie bei dem Ausführungsbeispiel gemäß Figur 14 an der Unterseite eines im Abstand zum Boden oder zu einer Montageplattform aufgehängten Milchcontainers 1" montiert ist. Der Milchcontainer 1" ist beispielsweise wie beim Ausführungsbeispiel gemäß Figur 14 gebaut und entweder stationär oder fahrbar aufgehängt. Die fahrbare Aufhängung erfolgt in einer Ausführung auf einem LKW, der zu verschiedenen Milchabgabestellen fahren kann. An der Oberseite des Milchcontainers 1" ist wiederum ein Reinigungsflansch 9 vorgesehen. Zur Aufhängung des Milchcontainers 1" dienen Streben 88.

Der Abgabekopf 630 ist mit Hilfe eines oberen Ventilsitzflansches 617 an einem Auslaßflansch 74" an der
tiefsten Stelle des Milchcontainers 1" befestigt. Am
unteren Ende des Abgabekopfs 630 ist ein unterer Ventilsitzflansch 618 vorgesehen, dessen Ventilsitz zur Aufnahme eines unteren Absperrkörpers 614 dient. Unterhalb
des unteren Ventilsitzflanschs 618 ist ein Abgabemundstück 629 angeordnet, aus dem lose Milch in eine Milchflasche F abgebbar ist. Der untere Absperrkörper 614
und ein oberer Absperrkörper 615 sitzen verschiebbar
auf einer Betätigungsstange 610, die durch einen auf
der Oberseite des Milchcontainers 1" montierten Hebels
619 auf und ab bewegbar ist. Der obere Absperrkörper
615 wird durch eine erste Feder 616 nach unten gedrückt, während der untere Absperrkörper 614 durch eine
zweite Feder ebenfalls gegen einen Bund nach oben gedrückt wird. Der Abstand der beiden Absperrkörper 614
und 615 ist auf der Betätigungsstange 610 so gewählt,
daß bei angehobenem Hebel 619 und damit durch den unteren Absperrkörper 614 verschlossenem unteren Ventilsitzflansch 618 der obere Absperrkörper 615 vom oberen Ventilsitzflansch 617 abgehoben ist. Dadurch kann bei verschlossenem Abgabemundstück 629 Milch aus dem Milchcontainer 1" in den Abgabekopf 630 unter dem Einfluß der
Schwerkraft einströmen. Bei der Abwärtsbewegung der Betätigungsstange 610 legt sich der obere Absperrkörper
615 auf den oberen Ventilsitzflansch 617 und sperrt
dadurch den Milchcontainer 1" ab, während gleichzeitig
der untere Absperrkörper 614 den unteren Ventilsitzflansch 618 freigibt. Dadurch kann die im Abgabekopf 630 zuvor gesammelte Milch durch das Abgabemundstück 629 nach unten in die Milchflasche F ausfließen.

Die Vorrichtung wurde anhand von bevorzugten Ausführungsbeispielen in Verbindung mit der Abgabe von Milch lediglich beispielhaft erläutert. Es ist jedoch klar, daß die erfindungsgemäße Vorrichtung auch zur Abgabe von anderen Flüssigkeiten, insbesondere Getränken jeglicher Art geeignet ist, die in großen Containern von beispielsweise mehr als 100 Litern an den Abgabeort gebracht werden müssen. Beispiele für derartige Getränke sind Fruchtsäfte jeder Art, deren Abgabe die ähnlichen Schwierigkeiten wie Milch bereitet und die ähnlichen lebensmittelrechtlichen Bestimmungen wie Milch unterworfen sind.

## Ansprüche

1. Vorrichtung zum automatischen keimarmen Abfüllen von loser Milch in Flaschen, Kannen o.ä. mit einem in der Molkerei befüllbaren, an den Abgabeort der Milch transportierbaren und dort an die Vorrichtung anschließbaren Milchcontainer (1), dadurch gekennzeichnet,

- daß auf dem Milchcontainer (1) ein in der Molkerei sterilisierbarer Abgabekopf (30) befestigt ist, der einen Meßzylinder (31) und einen Auslaufstutzen (35) aufweist;

- daß der Auslaufstutzen (35) durch eine von außerhalb des Auslaufstutzens (35) betätigbare Absperrvorrichtung freigebbar bzw. absperrbar ist;

- daß an den Meßzylinder (31) eine in den Milchcontainer (1) führende Rohrleitung (2, 2') angeschlossen ist; und

- daß eine Einrichtung zur Förderung der Milch aus dem Milchcontainer (1) in den Abgabekopf (30) vorgesehen ist.

2. Vorrichtung nach Anspruch 1, dadurch gekennzeichnet, daß die Einrichtung zur Förderung der Milch eine an dem oder in dem Milchcontainer (1) montierte Pumpe (6) ist.

3. Vorrichtung nach Anspruch 2, dadurch gekennzeichnet, daß die Pumpe (6) eine Tauchpumpe mit einem im Betrieb in den Milchcontainer (1) eingesetzten Saugkopf (160) und einen außerhalb des Milchcontainers (1) über einen Pumpenflansch (9) montierten Pumpenmotor (60) mit einer sich in den Milchcontainer (1) erstreckenden Pumpenwelle (8) ist, wobei im Saugkopf (160) ein die Milch durch die Rohrleitung (2) förderndes Flügelrad (10) auf dem unteren Ende der Pumpenwelle (8) sitzt.

4.  Vorrichtung nach Anspruch 2, dadurch gekennzeichnet, daß die Einrichtung zur Förderung der Milch eine an den Abgabekopf (30) angeschlossene Saugpumpe ist.

5.  Vorrichtung nach Anspruch 2, dadurch gekennzeichnet, daß die Einrichtung zur Förderung der Milch eine keinarm gehaltene Druckgasquelle ist, die im Betrieb an den Milchcontainer (1) über Druckleitungen, Steuer- und Absperrventile sowie Filter angeschlossen ist.

6.  Vorrichtung nach Anspruch 5, dadurch gekennzeichnet, daß als Treibmittel für die Druckgasquelle ein Inertgas wie Luft, Stickstoff usw. vorgesehen ist.

7.  Vorrichtung nach Anspruch 1, dadurch gekennzeichnet, daß die Absperrvorrichtung für den Auslaufstutzen (35) einen in den Auslaufstutzen (35) eingesetzten und im Ruhezustand einen Ventilsitz (59) absperrenden Absperrkörper (14) und einen den Auslaufstutzen (35) und den Absperrkörper (14) umgebenden Hubmagneten (15) umfaßt.

8.  Vorrichtung nach Anspruch 7, dadurch gekennzeichnet, daß der Absperrkörper (14) ein von einem Mantel (56) aus Edelstahl umgebener Weicheisenkern ist.

9. Vorrichtung nach Anspruch 7, dadurch gekennzeichnet, daß der Hubmagnet (15) in einem Edelstahl-Mantel (166) eingekapselt und mit seitlich abstehenden, zur Halterung dienenden Beinen (164) versehen ist.

10. Vorrichtung nach Anspruch 1, dadurch gekennzeichnet, daß die Absperrvorrichtung für den Auslaufstutzen (35') eine Zange (42) ist, die zum Zweck der Absperrung mit ihren Klemmbacken (44) ein auf den Auslaufstutzen (35') aufgestecktes Schlauchstück (53) dichtend abquetscht.

11. Vorrichtung nach Anspruch 10, dadurch gekennzeichnet, daß die Zange (42) in ihrer Öffnungs- und Schließbewegung durch eine Exzenternocke (48) gesteuert ist.

12. Vorrichtung nach Anspruch 1, dadurch gekennzeichnet, daß der Meßzylinder (31, 31") von einem Sammelzylinder (86, 86') umgeben ist.

13. Vorrichtung nach Anspruch 12, dadurch gekennzeichnet, daß der Sammelzylinder (86) einen geneigten Sammelzylinderboden (87) hat.

14. Vorrichtung nach Anspruch 1 oder 13, dadurch gekennzeichnet, daß die Rohrleitung (2') tangential in den Sammelzylinder (86) mündet.

15. Vorrichtung nach Anspruch 13, dadurch gekennzeichnet, daß die Rohrleitung (2') an der tiefsten Stelle (96) des Sammelzylinders (86) ansetzt.

16. Vorrichtung nach Anspruch 1 oder 12, dadurch gekennzeichnet, daß die Rohrleitung (2") über einen Einlaufstutzen (34') von oben in den Sammelzylinder (86') mündet.

17. Vorrichtung nach Anspruch 16, dadurch gekennzeichnet, daß der Sammelzylinder (86') durch ein Überlaufrohr (36) mit der Rohrleitung (2") verbunden ist.

18. Vorrichtung zum automatischen keimarmen Abfüllen von loser Milch in Flaschen, Kannen o.ä. mit einem in der Molkerei befüllbaren und an den Abgabeort transportierbaren Milchcontainer (1'), dadurch gekennzeichnet, daß unter dem Milchcontainer (1') ein Abgabekopf (30"") montierbar ist, der einen Meßzylinder (31"") enthält und dessen Zulauf und Ablauf absperrbar sind.

19. Vorrichtung nach Anspruch 18, dadurch gekennzeichnet, daß der Zulauf und der Ablauf des Meßzylinders (31"") durch Hubmagnete (15, 115) mit im Förderstrom der Milch liegenden ·Absperrkörpern (14, 114) absperrbar sind.

20. Verfahren zum keimarmen Abgeben von loser Milch in Flaschen, Kannen o.ä., dadurch gekennzeichnet,
    - daß in der Molkerei ein Milchcontainer (1) zusammen mit einem Abgabekopf (30, 630) keimarm gemacht wird;
    - daß anschließend der Milchcontainer (1) mit Milch von etwa 2° C befüllt wird;
    - daß der Milchcontainer (1) mit dem Abgabekopf (30, 630) an den Abgabeort transportiert wird; und

0085758

- daß der Abgabekopf (30, 630) am Abgabeort an eine Steuerschaltung angeschlossen wird, mit der abgemessene Mengen von loser Milch durch Knopfdruck o.ä. abgegeben werden können.

HU/wo

Fig.1

Fig.2

Fig.3

0085758

Fig.4

Fig.5

Fig.6

Fig. 7

0085758

Fig. 8

Fig. 9

Fig.10

Fig. 11

Fig. 12

## Fig.13

0085758

Fig.14

0085758

Fig. 15